Europäisches Patentamt

European Patent Office

Office européen des brevets

(19)

(11) Veröffentlichungsnummer: **0 086 489**
**A1**

(12) ## EUROPÄISCHE PATENTANMELDUNG

(21) Anmeldenummer: **83101417.0**

(22) Anmeldetag: **14.02.83**

(51) Int. Cl.³: **C 02 F 3/02,** B 65 D 88/12,
E 03 F 5/10

(30) Priorität: **15.02.82 DE 3205237**

(43) Veröffentlichungstag der Anmeldung: **24.08.83**
**Patentblatt 83/34**

(84) Benannte Vertragsstaaten: **AT BE CH DE FR GB IT LI LU
NL SE**

(71) Anmelder: **Westermair, Werner, Römerstrasse 2,
D-8062 Markt Indersdorf (DE)**

(72) Erfinder: **Westermair, Werner, Römerstrasse 2,
D-8062 Markt Indersdorf (DE)**
Erfinder: **Rothe, Klaus, Karl-Jacob-Strasse 25,
D-2000 Hamburg 5 (DE)**

(74) Vertreter: **Diehl, Hermann O., Dr. et al, Diehl & Kressin
Flüggenstrasse 17, D-8000 München 19 (DE)**

(54) **Kläranlage.**

(57) Eine Kläranlage mit einer Vorklärstufe zur mechanischen Reinigung des Abwassers enthält eine Belebungsstufe mit zumindest einem Belebungsbecken und zumindest eine Nachklärstufe mit einem oder mehreren Nachklärbecken. Eine Druckluftquelle dient zur Versorgung der Belebungsstufe mit Druckluft. Bei dieser Kläranlage bilden ein ebener Boden (2) ebene Seiteninnenwandungen (19, 20) und Stirninnenwandungen (21, 22) und/oder quer die Seiteninnenwandungen verbindende ebene Trennwandungen (11) zumindest eines quaderförmigen, eigensteifen und frei aufstellbaren Behälters (1) die Belebungsbecken und die Nachklärbecken. In den Stirnwänden und in den Trennwandungen sind Durchgangsöffnungen (23-26) vorgesehen, durch welche das die Behälter in Längs-richtung durchfließende Abwasser in die Belebungsbecken von diesen in die Nachklärbecken und aus diesen gelangt. Sämtliche Becken und Behälter weisen über ihre gesamte Länge die gleiche rechteckförmige Querschnittsdimension auf und enthalten als Einbauten Belüftereinheiten bzw. druckluftbetätigte Schlammheber, deren Längs- und Querausdehnung ein Vielfaches von einem Grund-Raster ist, das auch die Grundflächen der Becken und Behälter festlegt. Eine spezielle Ausbildung und Anordnung von Einbauten, Armaturen und Verbindungsstücken erlaubt eine vielseitige baukastenmäßige Anpassung und Erweiterung der Kläranlage entsprechend den jeweiligen Entsorgungsproblemen.

Beschreibung

Die Erfindung betrifft eine Kläranlage mit einer Vorklärstufe zur mechanischen Reinigung des Abwassers, einer Belebungsstufe mit mindestens einem Belebungsbecken und mit zumindest einer Nachklärstufe, welche zumindest ein Nachklärbecken enthält, sowie mit einer Druckluftquelle zur Versorgung der Belebungsstufe mit Druckluft.

Kläranlagen der vorstehend beschriebenen Art, die nach dem Belebtschlammverfahren arbeiten, sind bekannt. Eine derartige Anlage, bei der jedoch eine Vorklärung zur mechanischen Reinigung des Abwassers nicht vorgenommen wird, stellt die "Purimat"-Langzeit-Belebungsanlage der Orenstein-Koppel und Lübecker Maschinenbau AG dar. Die Anlage besteht aus einem auf ein spezielles Betonfundament montierbaren aufrechtstehenden, an seiner Oberseite offenen Behälter, der durch eine Längswand in ein Belebungsbecken und ein Nachklärbecken unterteilt ist. Über eine der Längsseite folgenden Zulaufrinne wird das Rohabwasser gleichmässig dem Belebungsbecken zugeführt, in dem es durch Druckluft quer zum Behälter umgewälzt wird und dabei eine biologische Reinigung erfährt. Das vom zulaufenden Rohabwasser verdrängte Abwasser-Schlammgemisch fliesst durch eine Vielzahl von Öffnungen in der Längsmittelwand in das Nachklärbecken hinein, welches durch eine weitere parallel zur Längsachse des Behälters verlaufende Tauchwand in zwei Schächte unterteilt ist, von denen der der Trennwand zugehörige Schacht einen Entgasungsschacht und der zweite ein Nachklärteil bildet, das über die gesamte Länge langsam von unten nach oben durchströmt wird, wobei sich in diesem Bereich ein Biofilter bildet. Der sich im Sohlenbereich des Nachklärbeckens abscheidende Schlamm wird kontinuierlich mittels Mammutpumpen in das Belebungsbecken zurückgeführt.

- 2 -

0086489

Für grössere Anlagen wird vorgeschlagen, mehrere dieser Einheiten parallel zu schalten. Für besondere Fälle wird vorgeschlagen, mehrere der Behälter in Reihe zu schalten, um verschiedene Betriebsbedingungen in den einzelnen Bekken zu erreichen. Diese Anlage hat den Nachteil, dass aufgrund der durch die Geometrie der Anlage fest vorgegebenen Verhältnisse von Belebungsbecken zu Nachklärbecken eine Anpassung an Abwässer mit sehr unterschiedlicher Zusammensetzung und an die von Land zu Land variierenden Betriebsvorschriften nur sehr begrenzt möglich ist. Auch die Möglichkeiten zur Anpassung an die jeweils zu entsorgenden Einwohnerzahlen oder Einwohnerzahl-Gleichwerte sind begrenzt. Einer baukastenmässigen Erweiterung steht nämlich entgegen, dass jeweils weitere vollständige, aus Belebungsbecken und Nachklärbecken bestehende Einheiten eingesetzt werden müssen. Die Anlage ist daher für Kommunen, bei denen mit einem erheblichen Wachstum zu rechnen ist oder die von vornherein schon eine gewisse Grösse überschreiten, nicht geeignet. Hinzu kommen Schwierigkeiten mit dem Transport der Anlage, da diese bezüglich Höhe, Breite und Länge erhebliches Übermass aufweist, weshalb sie nur mit abgesicherten Spezialtransportern beförderbar ist. Für einen Einsatz in Entwicklungsländern oder für einen temporären Bedarf ist die Anlage auch insofern ungeeignet, als zu ihrer Aufstellung ein äusserst exakt ausgebildetes Eisenbetonfundament benötigt wird, in welches an definierten Stellen Befestigungsanker einzugiessen sind. Ein Vereinfachen oder Weglassen dieser Fundamente ist nicht möglich, da die Einheit im Bereich des Nachklärbeckens weit auskragt, so dass eine erhebliche Kippgefahr besteht, wenn beispielsweise das Belebungsbecken ausgelassen und das Nachklärbecken mit Flüssigkeit gefüllt ist.

Der vorliegenden Erfindung liegt daher die Aufgabe zugrunde, eine im Baukastenprinzip aus industriell vorgefertigten Elementen nahezu beliebig dimensionierbare und erweiterbare, an die jeweiligen Gegebenheiten optimal anpassbare Kläranlage der eingangs beschriebenen Art zu schaffen, die leicht zu transportieren, ohne grössere bauliche Massnahmen an ihrem Einsatzort aufstellbar ist und ohne schwierige Montagearbeiten rasch in Betrieb genommen sowie von nahezu ungeschultem Personal betrieben und gewartet werden kann. Diese Aufgabe wird erfindungsgemäss dadurch gelöst, dass ein Boden, Seiteninnenwandungen und/oder die Seiteninnenwandungen verbindende Trennwandungen zumindest eines quaderförmigen, eigensteifen und frei aufstellbaren Behälters die Belebungsbecken und die Nachklärbecken bilden und dass in den Stirnwandungen und in den Trennwandungen Durchgangsöffnungen vorgesehen sind, durch welche das die Behälter in Längsrichtung durchfliessende Abwasser in die Belebungsbecken, von diesen in die Nachklärbecken und aus diesen gelangt. Die derart ausgebildeten Behälter sind vorzugsweise oben offen und mit ebenen Seiteninnenwandungen, Stirninnenwandungen und/oder Trennwandungen versehen, wobei sämtliche Becken und Behälter über ihre gesamte Länge die gleiche rechteckförmige Querschnittsdimension aufweisen. Durch geeignete Serien- und/oder Parallelschaltungen dieser Belebungs- und Nachklärbecken in geeigneter Zahl und Länge lässt sich jede gewünschte Anlage herstellen, wobei aufgrund der genannten Querschnittsdimension und der Durchgangsöffnungen in den Stirnflächen der Becken bzw. Behälter mittels einfacher Verbindungsglieder ein problemloses Zusammenschalten möglich ist. Auch die ingenieursmässige Dimensionierung und Anpassung der Anlagen an den jeweiligen Verwendungszweck ist hierdurch besonders einfach und überschaubar möglich, so dass Planungsfehler nahezu ausgeschlossen sind. Aus diesem Grunde vereinfachen sich auch gegenüber der Planung herkömmlicher Kläranlagen die Planungskosten und der Aufwand für die zur Errichtung notwendigen staatlichen Genehmigungsverfahren.

Da die verschiedenen Becken in Längsrichtung durchflossen werden, lassen sich aufgrund der gleichbleibenden rechteckförmigen Querschnittsdimension die Einbauten zumindest bezüglich ihrer Dimensionierung quer zur Durchflussrichtung standardisieren, so dass sie vorgefertigt und auf Lager genommen werden können.

Im Hinblick auf eine besonders einfache Fertigung empfiehlt es sich, wenn alle Behälter die gleiche Einheitslänge aufweisen oder wenn zumindest ein Teil der Behälter die Einheitslänge und ein anderer Teil die halbe Einheitslänge aufweist.

Im Hinblick auf eine rationelle Fertigung und eine optimale Anpassung an die Probleme des jeweiligen Einsatzes empfiehlt es sich, die Länge der Belebungsbecken und/oder der Nachklärbecken jeweils als Vielfaches eines vorgegebenen Grund-Rasters zu wählen, dem auch die Einbauten angepasst sind. Die Länge des Grund-Rasters ist vorzugsweise durch die Beziehung $l/n$ wiedergegeben, wenn $l$ die Innenlänge des Behälters und $n$ eine ganze Zahl zwischen 5 und 3o ist.

Als vorteilhaft hat es sich erwiesen, das Grund-Raster für das Nachklärbecken etwa doppelt so gross zu wählen wie das Grund-Raster für die Belebungsbecken. Wenn die Länge des Nachklärbeckens jedoch grösser ist als die halbe Innenlänge des Behälters, was bedeutet, dass ein grosses Nachklärbecken zur Verfügung steht, empfiehlt es sich, das Grund-Raster des Nachklärbeckens etwa viermal so gross zu wählen wie das Grund-Raster des diesem vorgeschalteten Belebungsbeckens.

Gemäss einer bevorzugten Ausführungsform beträgt das Grund-Raster für das Belebungsbecken $l/2o$ und das Grund-Raster für die Nachklärbecken $l/12$, wenn die Länge der Nachklärbecken kleiner ist als $l/2$, bzw. $l/6$, wenn die Länge der Nachklärbecken grösser ist als $l/2$.

Gemäss einer weiteren besonders geeigneten Ausführungsform beträgt das Raster für die Belebungsbecken 1/24 und das Raster für die Nachklärbecken 1/12, wenn die Länge der Nachklärbecken kleiner ist als 1/2, bzw. 1/6, wenn die Länge der Nachklärbecken grösser ist als 1/2. Diese Wahl des Grund-Rasters ist in bezug auf die Dimensionierung der Einbauten besonders günstig, wenn der Behälter eine Innenlänge l von etwa 12 m aufweist.

Die Belebungsbecken enthalten mit Vorteil über ihre gesamte Grundfläche verteilte Belüftungseinheiten, die über dem Boden angeordnet sind und aus einheitlichen Einzelbelüftern, vorzugsweise sog. Dom-Belüftern, bestehen, welche zweckmässigerweise bezüglich ihrer Längserstreckung und/oder ihrer Quererstreckung dem jeweiligen Grund-Rastermass entsprechen.

Der in der Vorklärstufe, dem Nachklärbecken und gegebenenfalls nachgeschalteten Eindickbecken am Boden anfallende Schlamm wird zweckmässigerweise mittels druckluftbetätigter Schlammheber abgesaugt. Hierfür ist es günstig, wenn die Nachklärbecken Rutschflächen längs der Seitenwände enthalten, welche von diesen schräg zu dem Boden verlaufen, vorzugsweise in einem Winkel von 45$^\circ$. Die Rutschflächen können ebenfalls im Rastermass vorgefertigt sein. Bei Nachklärbecken mit einer kleinen Länge, insbesondere wenn diese kleiner ist als die halbe Innenlänge 1/2 des Behälters, empfiehlt es sich, in der Mitte zwischen den Rutschflächen auf dem Boden des Behälters ein durchlaufendes Dreiecksprofil anzubringen, das den beiden Seitenwänden zugekehrte weitere Rutschflächen bildet, so dass in den Nachklärbecken seitlich nebeneinander zwei Reihen von Schlammhebern anbringbar sind. Es ist des weiteren zweckmässig, wenn zwischen den einander zugekehrten Rutschflächen, vorzugsweise im Abstand des Grund-Rasters der Nachklärbecken, weitere Dreiecksprofilelemente angebracht sind, die senkrecht zu den Seitenwandungen verlaufen, so dass im Rastermass auf dem Boden des Nachklärbeckens Schlammtrichter entstehen, in welche mit Vorteil jeweils ein Schlammheber hinabreicht. Sämtliche Rutschflächen, insbesondere jedoch die Dreiecksprofilelemente, können aus vorgefertigten eigenschweren Bauteilen bestehen, die bei aufgestelltem Behälter lediglich in die gewünschte Lage gelegt werden müssen. Bevorzugt sind hierzu Betonelemente, die auch aus mehreren Stücken zusammengesetzt sein können. Im Hinblick auf einen einfachen Betrieb und eine einfache Wartung der Kläranlage ist es besonders empfehlenswert, in ihr den gesamten Transport des die Anlage durchlaufenden Abwassers und der aus diesem entstehenden flüssigen Produkte ausschliesslich mittels Druckluft und/oder eines vorgegebenen Gefälles durchzuführen.

Das Gefälle zwischen in Durchlaufrichtung aufeinanderfolgenden Becken beträgt zweckmässigerweise 2 bis 7 cm, vorzugsweise 5 cm. Man erhält es durch entsprechende Ausbildung der Durchgangsöffnungen, welche die Stirnwandungen und/oder die Trennwandungen durchsetzen, und/oder eine entsprechende Abstufung des Terrains, auf dem die einzelnen Behälter stehen.

Um zu verhindern, dass bei einem stossweisen Anstieg der Abwasserzufuhr zum Belebungsbecken das Abwasser in grossen Mengen ungeklärt zum Nachklärbecken strömt, wird der Auslassöffnung aus dem Belebungsbecken ein Auslaufregler vorgeschaltet, der eine Pufferwirkung ausübt. Als Auslaufregler dient vorzugsweise eine Rinne, die seitlich mit einer Lochung versehen ist, wobei die von der Lochung eingenommene Gesamtfläche und/oder die Lage der Auslassöffnung derart bemessen sind, dass bei normalem Durchsatz von Abwasser der Flüssigkeitspegel im Belebungsbecken unter der Kante der Rinne verbleibt, die zweckmässigerweise längs zur Stirnwand bzw. der Trennwand verläuft, welche das Belebungsbecken ausgangsseitig abschliesst. Die zu einem Nachklärbecken führende Auslauföffnung mündet mit Vorteil in einem in dem Nachklärbecken angeordneten Rohr, dessen Oberseite über den Flüssigkeitspegel des Nachklärbeckens hinaufreicht und dessen unteres Ende unterhalb des Flüssigkeitspegels in dem Nachklärbecken jedoch oberhalb der Ansaugöffnung benachbarter Saugheber zwischen diesen mündet.

Wenn die Belebungsstufe zumindest zwei Belebungsbecken und/oder die Nachklärstufe zumindest zwei Nachklärbecken enthält, die in Reihe durchflossen sind, werden mit Vorteil Mittel vorgesehen, über welche die Einlass- und Auslassöffnung jedes Belebungsbeckens und/oder Nachklärbeckens kurzschliessbar sind, so dass diese über in dem Boden des jeweiligen Beckens angeordnete Auslassventile zu Wartungszwecken entleert werden können, ohne dass dabei der Betrieb der gesamten Anlage unterbrochen werden muss. Am einfachsten geschieht dies durch einen biegsamen, an die Einlass- bzw. Auslassöffnungen mit seinen freien Enden ankoppelbaren Schlauch.

Die Belüftungseinheiten jedes Belebungsbeckens sind mit Vorteil auf der Oberseite eines zentral mit Druckluft versorgten Rohrgerüstes angebracht, das auf dem Boden des Belebungsbeckens vorzugsweise über Abstandshalter aufliegt und als Ganzes in das Belebungsbecken einsetzbar bzw. aus diesem herausnehmbar ist. Da die Rohre einer zentralen Druckluftversorgung gemäss einer bevorzugten Ausgestaltung der Erfindung oben auf den Behältern und vorzugsweise parallel zu deren Längsachse angeordnet sind, lassen sich die einzelnen Verbraucher in einfacher Weise über Abzweigungsleitungen anschliessen, in denen zweckmässigerweise Absperr- und/oder Regelventile vorgesehen sind. Die zu den Belüftungseinheiten und/oder den Schlammhebern führenden Abzweigleitungen können starr ausgebildete Rohre sein oder auch biegsame Schläuche, welche besonders dann zur Anwendung kommen, wenn pneumatisch oder hydraulisch betätigbare Hubeinrichtungen vorgesehen sind, welche die Gesamtheit der mittels je eines Rohrgerüstes zusammengefassten Belüftungseinheiten oder einzelne Schlammheber anzuheben gestatten.

Die Schlammrückführung von den Nachklärbecken und/oder Eindickbecken zu dem Belebungsbecken erfolgt zweckmässigerweise in Rohren oder offenen Gerinnen, welche ebenfalls auf die Oberseite der Behälter aufgelegt sind.

Bei identischer Lage und Ausbildung der Durchgangsöffnungen in den Stirnflächen aller Behälter und einer Ausgestaltung derselben mit Anschlusselementen für Schlauch- bzw. Rohrverbindungen gestaltet sich das Zusammenkoppeln der einzelnen Behälter besonders einfach. Dies gilt insbesondere dann, wenn die Durchgangsöffnungen in über die Stirnwandung des Behälters vorstehende Rohrstutzen münden, die an ihren freien Enden mit Flanschen versehen sind. Durch Verbindungsstücke mit parallel zueinander verlaufenden Anschlussenden lässt sich eine Kopplung zu dem nächsten stirnseitig gegenüberliegenden Behälter vornehmen. Wenn das Verbindungsrohr zwischen den parallel zueinander liegenden Anschlussenden schräg verläuft, ergibt sich automatisch das gewünschte Gefälle zu dem von dem folgenden Behälter gebildeten tieferstehenden Becken. Für einen Anschluss seitlich nebeneinander angrenzender Behälter eignen sich besonders U-förmige Verbindungsrohre mit parallel zueinander und in der gleichen Ebene belegenen Anschlussenden. Die Mittelabstände dieser Anschlussenden sind so gewählt, dass sie einen Abstand voneinander aufweisen, der bei Seite an Seite direkt aneinander angrenzend aufgestellten Behältern dem Mittelabstand zweier Durchgangsöffnungen in den seitlich nebeneinanderliegenden Stirnflächen benachbarter Behälter entspricht. Damit auch zwischen seitlich aneinander angrenzenden Behältern das für den Durchlauf notwendige Gefälle erzielbar ist, sind die U-förmigen Verbindungsrohre mit Endflanschen versehen, welche kreisförmig um ihre Austrittsöffnungen verlaufende Schlitze zur Aufnahme von Befestigungsschrauben aufweisen, wobei die Verbindungsrohre des weiteren in ihrer Länge mit Vorteil verschiebbar sind.

Die Behälter können in verschiedenen Konfigurationen entsprechend den jeweiligen Erfordernissen angeordnet werden. Als besonders günstig hat sich eine Anordnung ergeben, bei der eine Mehrzahl von Behältern mit gleichen Aussenabmessungen Seite an Seite aneinanderangrenzend zu einer Behältergruppe zusammengesetzt ist, wobei zumindest einer der Behälter ein Belebungsbecken bildet und zumindest einer ein Nachklärbecken enthält, das mit einer Seite an eine Stirnwandung des entsprechenden Behälters angrenzt. Diese Ausgestaltung eignet sich besonders für mittelgrosse Kläranlagen, wobei dann die Behälter über die in den Stirnwandungen gelegenen Durchgangsöffnungen ausserhalb der Behälter derart miteinander verbunden sind, dass die Behälter einen Strömungsweg festlegen, bei dem sie nacheinander und bezüglich benachbarter Behälter gegenläufig durchflossen sind.

Bei grösseren Anlagen ist es zweckmässig, wenn hinter einer ersten Behältergruppe mit einer Mehrzahl seitlich nebeneinander angeordneter Behälter gleicher Aussenabmessung zumindest ein weiterer Behälter oder eine weitere Behältergruppe mit seitlich und/oder stirnseitig aneinander angrenzenden Behältern angebracht sind. Insbesondere bei grossen Gruppen empfiehlt es sich, die Behälter der weiteren Behältergruppe mit ihren Seitenwandungen parallel zu den Behältern der ersten Behältergruppe anzuordnen oder gemäss alternativer Ausgestaltung senkrecht zu dieser. Die Rohrverbindungen wer-

0086489

den dann besonders einfach. Bei derartigen Zusammenfassungen ist es zweckmässig, wenn die Behälter in der ersten Behältergruppe ausschliesslich Belebungsbecken sind. Die Behälter der letzten Behältergruppe sind zweckmässigerweise ausschliesslich Nachklärbecken. Insbesondere dann, wenn ein Teil der Nachklärbecken als Schlammeindicker eingesetzt werden soll, empfiehlt es sich, in der letzten Behältergruppe diese zu Paaren anzuordnen, in denen sich die beiden Behälter stirnseitig im Abstand gegenüberstehen, wobei der eine Behälter jedes Paares als Nachklärbehälter und der andere als Schlammeindicker eingesetzt ist.

Alle Behälter, welche als Ganzes Belebungsbecken bilden, sind zweckmässigerweise durch zumindest eine quer zu den Seitenwandungen verlaufende Trennwandung unterteilt, welche zumindest eine Durchgangsöffnung enthält, die mit ihrem unteren Bereich in den Flüssigkeitspegel der beiden Teilbecken eintaucht. Da die Teilbecken in einfacher Weise - wie vorstehend beschrieben - überbrückt werden können, vereinfacht sich die Wartung in den Behältern.

Als besonders zweckmässig hat es sich erwiesen, wenn in den Behältergruppen diejenigen Behälter, welche in der Belebungsstufe und/oder der Nachklärstufe zueinander parallele Strömungswege festlegen, am Einlass und/oder Auslass mit einer Verteilervorrichtung versehen sind, welche eine Vermischung der in die entsprechenden Becken gleicher Betriebsart einströmenden bzw. aus diesen austretenden Flüssigkeiten bewirkt. Auf diese Weise werden Unregelmässigkeiten oder Fehler in einzelnen Becken ausgeglichen.

Anlagen, die aus mehreren jeweils einen Behälter ausfüllenden Belebungsbecken und/oder Nachklärbecken bestehen, ermöglichen einen besonders vielseitigen Einsatz, wenn die Belebungsbecken und/oder die Nachklärbecken über Verteiler-

0086489

systeme an den Abwasserzulauf bzw. den Zulauf des durch die Belebungsbecken biologisch gereinigten Abwassers derart angeschlossen sind, dass alle Belebungsbecken oder Teilgruppen derselben und/oder alle Nachklärbecken oder Teilgruppen derselben wahlweise in Serie oder parallel betrieben werden können. Dies bedeutet, dass geringe Mengen besonders stark belasteter Abwässer einer besonders ausführlichen biologischen Reinigung unterzogen werden können, wenn man die Belebungsbecken in Reihe schaltet, während man bei Parallelschaltung besonders grosse Mengen von nicht so stark belastetem Abwasser einer ausreichenden biologischen Reinigung unterzieht. Die Nachklärbecken lassen sich durch die beschriebene Schaltung wahlweise zur Nachklärung oder als Schlammeindicker verwenden, wobei beispielsweise auch ein Betrieb möglich ist, bei dem zunächst alle Nachklärbecken zur Nachklärung verwendet werden, wenn von dem Belebungsbecken eine grosse Menge Abwasser anfällt, während sie bei Zurückgehen dieses Anfalls schrittweise als Schlammeindicker eingesetzt werden können. Als Verteilersystem eignen sich hierzu besonders doppelte Gerinne, die vor den Belebungsbecken bzw. vor den Nachklärbecken angebracht sind und freisetzbare Abzweigungen enthalten, die in Abhängigkeit von an diskreten Stellen in der Anlage gemessenen Parametern, wie Menge des anfallenden Abwassers, Verschmutzungsgrad desselben, Schwebstoffbelastung desselben etc., manuell betätigt werden oder programmgesteuert sind.

Gemäss einer bevorzugten Weiterbildung der Erfindung enthält ein Behälter als Vorklärstufe zumindest ein Absetzbecken mit einem druckluftbetätigten Schlammheber sowie einen Maschinenraum mit Vorrichtungen zur Drucklufterzeugung, wobei der Behälter im Bereich des Maschinenraums mit einer Abdeckung versehen ist, um die Maschinen gegen Witterungseinflüsse zu schützen. Die Vorklärstufe ist mit Vorteil an einem Ende des Behälters vorgesehen. Sie enthält

0086489

eine auf den Behälter aufgesetzte Siebvorrichtung, mittels der aus dem zugeführten Abwasser grobe Abfallstoffe entfernt werden, welche in einen Aufnahmebehälter gelangen.

Insbesondere bei hohen Aussentemperaturen kann von der Siebvorrichtung bzw. dem Aufnahmebehälter für die ausgesonderten groben Abfälle eine Geruchsbelästigung ausgehen. Gemäss einer Weiterbildung der Erfindung wird diese dadurch vermieden, dass über der Vorklärstufe einschliesslich der Siebvorrichtung und des Aufnahmebehälters ein Gehäuse aufgesetzt ist, dessen Inneres mit dem Maschinenraum derart in Verbindung steht, dass die vom Kompressor für die Drucklufterzeugung angesaugte Luft aus dem Gehäuse gezogen wird. Die von der Luft aufgenommenen Geruchsstoffe und Gase werden bei ihrer feinverteilten Durchleitung durch die Belebungsbecken "ausgewaschen", bevor die Luft ins Freie tritt. Zweckmässigerweise sind das Gehäuse und der Maschinenraum über einen Kanal verbunden, in den ein Ventilator mit umkehrbarer Förderrichtung eingebaut ist, wobei des weiteren eine abschaltbare direkte Luftzufuhr zu dem Maschinenraum besteht, so dass bei einer Umkehr der Förderrichtung des Ventilators bei niedrigen Aussentemperaturen, die zu einem Einfrieren der Vorklärstufe führen könnten, die bei dem Betrieb des Antriebsmotors für den Kompressor und des Kompressors anfallende Wärme zur Beheizung des Gehäuses nutzbar ist. Hierbei ist es besonders zweckmässig, wenn der Motor für den Antrieb des Kompressors und/oder der Kompressor in einen Kreislauf eines Wärmeübertragungsmediums einschaltbar sind, der zu einem im Bereich des Kanals angebrachten Wärmetauscher führt.

Zur Reinigung besonders hoch belasteter Abwässer und in denjenigen Fällen, in denen nur beschränkter Raum zur Verfügung steht, wird gemäss einer Weiterbildung der Erfindung ein Rieselturm verwendet, der ebenfalls aus einem der

0086489

vorstehend beschriebenen Behälter besteht, welcher an seiner Oberseite geschlossen und auf eine seiner Stirnflächen gestellt ist. Der Rieselturm wird von unten mit Druckluft beaufschlagt, die im Gegenstrom zu dem von oben in feinverteilter Form herabfallenden Abwasser strömt. Der Rieselturm lässt sich einfach und kostengünstig aus einem Grundbehälter herstellen, wie er auch für die Belebungsbecken und die Nachklärbecken sowie für die Vorklärstufe und das Maschinenhaus Verwendung findet und aus diesen Gründen fabrikmässig vorgefertigt werden kann. Der Behälter wird hierbei in seinem Mittelbereich parallel zu seinem Boden und/oder seinen Seitenwandungen mit Längswänden versehen. An dem einen Ende dieser Längswände werden Rieselsiebe angebracht. Im Abstand von ihren entgegengesetzten Enden wird eine Trennwand eingepasst, die vom Boden des Behälters schräg in Richtung auf die benachbarte Stirnfläche bis zur Oberseite verläuft und die Rieselstrecke gegen das jenseits dieser Trennwand gelegene Maschinenhaus abgrenzt, welches Pumpen und/oder Mittel zur Drucklufterzeugung enthält. Die Austrittsöffnung für das vorgeklärte Abwasser, zumindest eine Zuführungsöffnung für die Druckluft zwischen der Trennwand und den Enden der Längswand und zumindest eine zwischen den Rieselsieben und der benachbart zu diesen liegenden Stirnfläche gelegene Absaugöffnung für die Druckluft werden vorzugsweise in der die Oberseite des Behälters verschliessenden Wandung angebracht. Auch Leitungen für die Zufuhr des Abwassers und/oder die Rückführung des vorgeklärten Abwassers und/oder die Rückführung der durch die Rieselstrecke gedrückten Luft sind zweckmässigerweise auf diese Oberseite des Behälters montiert, so dass sie gegebenenfalls mit der diese bildenden Platte auf den Behälter aufsetzbar sind, was eine rasche und reibungslose Fertigung vereinfacht.

Eine weitere besonders zweckmässige Verwendung der Behälter ergibt sich, wenn man diese mit einer durchgehenden Längstrennwand versieht und an deren einer Seite, benachbart zu den Stirnflächen des Behälters, zumindest je eine Pumpe anbringt, deren Saugende durch die Längstrennwand hindurchreicht und deren Druckende an eine Leitung angeschlossen ist, welche entlang der Längstrennwand verläuft. Die Oberseite des Behälters wird anschliessend mit einer Wandung verschlossen. Des weiteren erhält der Behälter eine im wesentlichen parallel zu seinen Stirnwandungen verlaufende Soll-Bruchstelle, etwa in der Mitte seiner Längsausdehnung, längs der er in zwei zueinander spiegelbildliche Abwassersammelbecken unterteilbar ist. Der fertiggestellte Behälter wird hierbei an seinen Einsatzort wie jeder andere Behälter gebracht und dort längs der Soll-Bruchstelle unterteilt, wonach die beiden Teile mit ihrer Behälterstirnfläche nach unten gekehrt in eine vorbereitete Grube eingesetzt werden.

Von den in den Stirnwänden des Behälters angebrachten Durchgangsöffnungen dient die eine, welche auf der Seite der Längswandung angeordnet ist, auf der sich die Pumpen befinden, zur Entwässerung des Pumpenraumes, wobei in sie ein Rückschlagventil einsetzbar ist. Die andere jenseits der Längswandung belegene Durchgangsöffnung wird mittels eines Einsatzes verschlossen, der zumindest einen sich in Richtung auf die Stirnwand verjüngenden Schlammtrichter festlegt. In den darüberliegenden Schacht mündet der Abwasserkanal, der dieses Abwassersammelbecken füllt, aus dem das Abwasser mittels der Pumpe zu der Vorklärstufe gepumpt wird. Auf der den Pumpen zugekehrten Seite der Längswandung und längs des Behälters, vorzugsweise an der seine Oberseite verschliessenden Wandung, ist eine Einstiegsleiter angebracht, um zu der Sohle des Pumpenschachts zu gelangen.

- 15 -

0086489

Der, wie die vorstehenden Ausführungen zeigen, äusserst vielfältig einzusetzende Behälter besteht gemäss einer besonders bevorzugten Ausführungsform aus einer ebenen rechteckförmigen Bodenplatte, längs deren Rändern senkrecht von der Bodenplatte abstehende Säulen befestigt sind, wobei an den nach innen ragenden Seiten der Säulen senkrecht zur Bodenplatte verlaufende Seitenwandungs- und Stirnwandungsplatten befestigt sind. Die Säulen haben zweckmässigerweise einen rechteckförmigen Querschnitt und fluchten mit ihren Aussenkanten mit der Aussenkante der Bodenplatte. An den Ecken des Behälters umfassen sie vorzugsweise die dort aneinander angrenzenden Wandungsbereiche kastenförmig. Durch diese Konstruktion wird sichergestellt, dass zum einen die erwünschten glatten Innenwandungen erhalten sind, zum anderen dass sich die Wandungen des Behälters bei einem Auffüllen mit Flüssigkeit nicht nach aussen aufbauchen. Die Säulen enden unter dem oberen Rand der Seitenwandungs- und Stirnwandungsplatten, wobei auf ihren Oberseiten eine um den Behälter umlaufende Verstärkung angebracht ist, die bündig mit dem Rand der Platten abschliesst. Die Aussenkanten der Verstärkung fluchten vorzugsweise auch mit den Aussenkanten der Säulen.

Unter der Bodenplatte parallel zu den Stirnwandungen des Behälters verlaufende Schwellen ermöglichen ein Aufstellen des Behälters auch in nicht ganz ebenem Gelände, da sich die Schwellen in den Boden leicht eindrücken. Zur Abstützung der Behälterenden ist je eine Schwelle längs der stirnseitigen Kanten der Bodenplatte angebracht. Die weiteren Schwellen sind zweckmässigerweise in äquidistanten Abständen über den Boden des Behälters verteilt.

Die Zahl der Schwellen ist geringer als die Anzahl der längs der Seitenwandungen des Behälters vorgesehenen Säulen, von denen vorzugsweise doppelt so viele vorgesehen sind als Schwellen. Als besonders günstig hat es sich erwiesen, wenn die zwischen den Stirnseiten des Behälters angeordenten Schwellen im wesentlichen zwischen benachbarten Säulen an den Seitenwandungen liegen.

Man erhält einen besonders einfachen und steifen Aufbau, wenn die Schwellen, die Säulen und die Verstärkungen am oberen Rand aus U-förmig abgebogenen Blechprofilen und die Kästen aus dreimal um 9o$^{o}$ abgebogenen Blechprofilen bestehen, wobei sie jeweils mit ihrer offenen Seite dem Behälterinneren zugekehrt sind. Die einzelnen Elemente sind vorzugsweise miteinander verschweisst.

Einem Auseinanderdrücken der Behälterwände durch die aufgenommene Flüssigkeit wirken auch Zuganker entgegen, von denen zumindest drei die offene Oberseite des Behälters überbrücken.

Die an den Stirnwänden der Behälter angebrachten Durchgangsöffnungen münden zweckmässigerweise zwischen der Ecksäule und der benachbarten Säule. Mit den Durchgangsbohrungen fluchtende, nach aussen vorstehende Rohrstutzen, welche an ihren freien Enden mit Flanschen versehen sind, stehen dabei nur soweit über die Stirnwandungsplatten vor, dass ihre Aussenkanten mit den Aussenkanten der Säulen fluchten. Die Rohrstutzen ermöglichen nicht nur eine äusserst einfache Verbindung der verschiedenen Behälter in der vorstehend beschriebenen Weise, sondern auch das Einhängen von Halterungsgliedern für eine Aufnahme auf Fahrzeugen und zum Absetzen von solchen.

Einer Korrosion wird wirksam entgegengewirkt, wenn die Bodenplatte, die Seitenwandungen, die Stirnwandungen, die Säulen, die oben umlaufende Verstärkung und die Schwellen aus dem gleichen Material, vorzugsweise einem Stahlblech mit einer Dicke von etwa 5 mm, gefertigt sind. Durch Sandstrahlen der Behälter und anschliessende Beschichtung mit
einem Epoxydharz lässt sich eine Verwitterung der Behälter
nahezu vollständig vermeiden.

Als günstig hat es sich ferner erwiesen, wenn die Behälter
in ihren Aussenabmessungen der DIN 1519o entsprechen,
welche die Abmessungen für Binnencontainer festlegt.

Die beiliegenden Zeichnungen bevorzugter Ausführungsbeispiele dienen der weiteren Erläuterung der Erfindung.

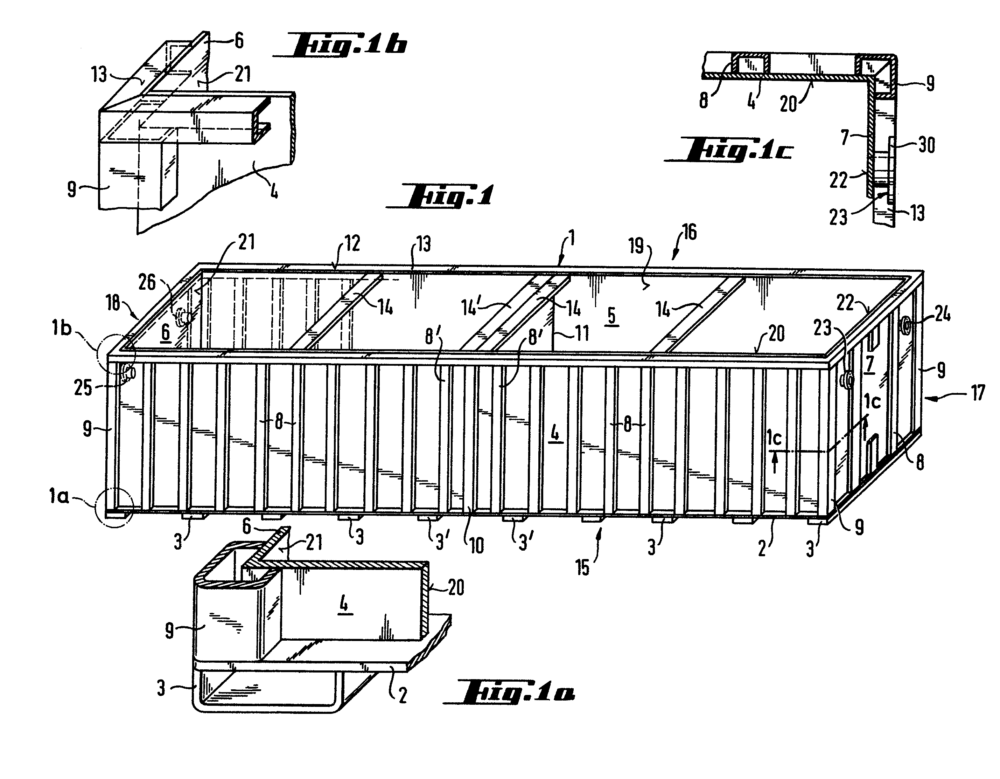

Fig. 1 zeigt in perspektivischer Seitenansicht die Konstruktion eines Behälters der in baukastenmäßiger
Zusammenschaltung mit entsprechenden weiteren Behältern und Einbauten die erfindungsgemäße Kläranlage bildet.

Fig. 1a zeigt eine perspektivische Detailansicht des in
Fig. 1 mit 1a bezeichneten unteren Eckbereichs
des Behälters.

Fig. 1b zeigt in einer perspektivischen Detailansicht im
vergrößerten Maßstab den in Fig. 1 mit 1b bezeichneten oberen Eckbereich des Behälters.

Fig. 1c zeigt eine Schnittansicht im vergrößerten Maßstab
des in Fig. 1 durch die Pfeile 1c-1c dargestellten
Kantenbereichs des Behälters von Fig. 1.

Fig. 2 zeigt einen Vertikalschnitt durch die Stirnseiten
zweier in Längsrichtung miteinander fluchtend angeordneter Behälter gemäß Fig. 1 und eines Verbindungselements mittels dessen die Behälter und in deren entsprechenden Stirnwänden angebrachte Durchgangsöffnung miteinander verbunden werden.

Fig. 3 zeigt in schematischer Seitenansicht drei in Längsrichtung mit je einem Gefälle aufeinander folgende
Behälter.

Fig. 4 zeigt in vergrößerter Darstellung den in Fig. 3 mit
IV angedeuteten Bereich zur Erläuterung eines Verbindungsstücks zwischen den Behältern.

Fig. 5 zeigt einen schematisierten Längsschnitt durch den Behälter von Fig. 1 zur Erläuterung von in diesem aufgenommenen Einbauten, wobei ein Ende des Behälters in ein abgeschlossenes Gehäuse hineinragt, das eine Vorklärstufe und einen Abfallbhälter für Feststoffe enthält.

Fig. 6    zeigt in teilgeschnittener Seitenansicht den von einem Gehäuse aufgenommenen Endbereich des Behälters und dessen Maschinenraum.

Fig. 7    zeigt in teilgeschnittener perspektivischer und schematisierter Darstellung Einbauten für den in Fig. 1 gezeigten Behälter welche zu einem Belebungsbecken und einem Nachklärbecken gehören.

Fig. 8    zeigt eine Draufsicht auf einen Teil eines Behälters der als Nachklärbecken ausgebildet ist, sowie die über dem Behälter verlegten Rohrleitungen.

Fig. 9    zeigt eine schematische Grundrißansicht von einem Ausführungsbeispiel des Behälters zur Erläuterung eines das Belebungsbecken festlegenden Rasters und eines das Nachklärbecken festlegenden Rasters.

Fig. 10   zeigt eine Grundrißansicht entsprechend zu derjenigen von Fig. 9 von einer weiteren Ausführungsform eines Behälters jedoch mit einem unterschiedlichen Raster im Belebungsraum und im Nachklärbecken.

Fig. 11   zeigt eine teilgeschnittene Seitenansicht von einem Belebungsbecken zur Erläuterung der in diesem angebrachten Schlammheber.

Fig. 12 zeigt im schematischen Längsschnitt einen als Belebungsbecken ausgebildeten Behälter mit dessen Einbauten .

Fig. 13 zeigt in schematisierter Seitenansicht ein Belebungsbecken mit einer pneumatischen Vorrichtung zur Anhebung der Belüftungseinrichtung.

Fig. 14 zeigt einen Längsschnitt durch einen auf eine Stirnfläche aufgestellten Behälters welcher Einbauten enthält, die aus ihm einen Rieselturm machen.

Fig. 15 zeigt einen Längsschnitt durch einen weiteren Behälter, der in eine Grube eingesetzt ist und als Abwassersammelbecken dient.

Fig. 16 zeigt eine Draufsicht auf das Abwassersammelbecken gemäß Fig. 15.

Fig. 17 zeigt eine schematische Draufsicht auf eine Kläranlage die aus drei seitlich aneinander angrenzenden Behältern gebildet ist.

Fig. 18 zeigt in perspektivischer Darstellung ein zur Verbindung der Behälter verwendetes U-Rohrstück.

Fig. 19 zeigt ein Verteilersystem, das vier seitlich aneinandergrenzenden Nachklärbecken vorgeschaltet ist, und dazu dient, die Nachklärbecken in beliebiger Kombination für die Nachklärung und als Eindickraum einzusetzen.

Fig. 20 bis 24 zeigen schematische Grundrißansichten von verschiedenen Ausführungsbeispielen von Kläranlagen, die aus einer Anordnung verschiedener Behälter gebildet sind.

Fig. 1 zeigt einen Behälter 1 im Rohzustand, d.h. ohne irgendwelche Einbauten. Der Behälter 1 besteht aus einer rechteckförmigen Bodenplatte 2, die auf Schwellen 3 ruht, welche von einer Seitenkante der Bodenplatte senkrecht zu dieser bis zu der entgegengesetzten Seitenkante verlaufen. Bei dem in Fig. 1 gezeigten Behälter, dessen Außendimensionen so gewählt sind, daß er die DIN 15190 erfüllt, d.h. einem Binnencontainer entspricht, mit einer Länge von 40 Fuß entsprechend 12,19 m, einer Breite von 8 Fuß entsprechend 2,44 m und einer Höhe von 8,5 Fuß entsprechend 2,59 m -, sind 10 Schwellen 3 in etwa unter der Boden-Platte 2 angeordnet, wobei die beiden äußersten Schwellen mit ihrer Außenkante mit den stirnseitigen Kanten der Bodenplatte 2 fluchten. Senkrecht zu der Bodenplatte 2 sind Seitenwandungsplatten 4 und 5 sowie Stirnwandungsplatten 6 und 7 mit ihren Unterkanten auf die Bodenplatte in einem gleichmäßigen Abstand von deren Rand aufgestellt und längs desselben mit der Bodenplatte starr verbunden. Auf den über die Seitenwandungsplattten 4 und 5 bzw. Stirnwandungsplatten 6 und 7 vorstehenden Randbereiche der Bodenplatte 2 sind vertikal verlaufende Säulen 8 angebracht, deren Außenfläche mit der Außenkante der Bodenplatte 2 fluchten und deren Seitenwandungen im wesentlich senkrecht zu dieser Außenfläche auf die Seitenwandplatten 4 bzw. 5 und die Stirnwandplatten 6 bzw. 7 verlaufen. Im Bereich der vier Kanten, an denen die Seitenwandungsplatten 4 bzw. 5 mit den Stirnwandungsplatten 6 bzw. 7 zusammenstoßen, sind entsprechende Säulen 9 angebracht, welche die angrenzenden Wandungsbereiche kastenförmig umfassen. Die Säulen weisen im Bereich der Seitenwände und der Stirnwände jeweils annähernd gleiche seitliche Abstände voneinander auf. Bei dem in Fig. 1 gezeigten Beispiel sind an den Seitenwänden zwanzig Säulen angebracht und auf den Stirnwänden fünf, die kastenförmigen Säulen 9 an den Ecken jeweils für jede Seite mitgezählt. Bei dieser Anordnung ist gewährleistet, daß die Auflagestellen der Säulen 8 auf der Bodenplatte 2 im wesentlichen seitlich zu den unter der Bodenplatte 2 angebrachten Schwellen 3 belegen sind. Bei dem in Fig. 1 gezeigten Beispiel ist in der Mitte der Seitenwand eine zusätzliche Säule 10 angebracht, da dort wie durch das Bezugszeichen 11 angedeutet, die Seitenwandungsplatten zusammengeschweißt sind, um dem Behälter in diesem Bereich eine zusätzliche Verstärkung zu geben.

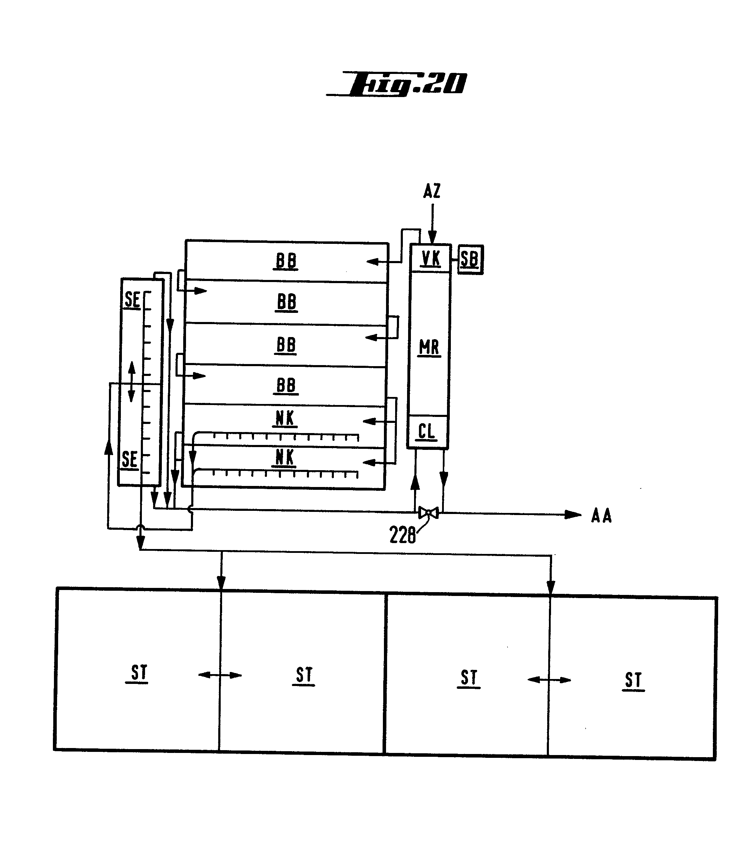

Längs der von dem oberen Rand der Seitenwandungsplatten 4 und 5 und der Stirnwandungsplatten 6 und 7 festgelegten Oberkante 12 des Behälters läuft eine kastenförmige Verstärkung 13 um diesen herum, welche plan mit der Oberkante 12 abschließt, auf den nicht bis zu dieser heraufreichenden oberen Enden der Säulen 8, 9 und 10 aufsitzt und mit den Außenflächen der Säulen 8, 9 und 10 fluchtet. Zwischen den Seitenwandungsplatten und am oberen Rand derselben sind Zuganker 14 angebracht, um die Stabilität des Behälters 1 zu erhöhen und zu verhindern, daß sich die Seitenwandungen nach außen ausbauchen, wenn der Behälter mit Flüssigkeit gefüllt ist. In der Regel werden drei Zuganker 14 verwendet, einer in der Mitte des Behälters und zwei weitere, die den rechts und links zur Mitte belegenen Bereich mittig unterteilen. Der in Fig. 1 zusätzlich dargestellte Zuganker 14' ist für die Fälle vorgesehen, bei denen der Behälter 1 mittig in zwei Teile unterteilt wird, was im folgenden noch näher anhand der Figuren 15 und 16 erläutert wird. Alle bislang beschriebenen Bauelemente des Behälters 1 bestehen aus dem gleichen Material, vorzugsweise einem

- 23 -

0086489

Stahlblech, wobei die Verbindungen durch Verschweißen hergestellt sind. Die Schwellen 3, die Säulen 8 und 10 sowie die umlaufende Verstärkung 13 bestehen dabei aus U-förmig gebogenen Profilen, die Säule aus einem dreimal um je 90$^{\mathrm{o}}$ gebogenen Profil. Die offenen Bereiche dieser Profile sind jeweils nach innen gekehrt, wobei die freien Schenkel an die Bodenplatte 2, die Seitenwandungsplatten 4 bzw. 5 die Stirnwandungsplatten 6 bzw. 7 angeschweißt sind.

Bei dem in Fig. 1 gezeigten Behälter haben die Schwellen 3 eine Breite von etwa 30 cm, wobei sie, ausgehend von den an den Stirnkanten der Bodenplatte 2 gelegenen Schwellen, einen Abstand von einem Meter aufweisen. Die beiden mittleren Schwellen, die mit 3' bezeichnet sind, haben auf diese Weise einen etwas größeren Abstand voneinander. Dem wird durch die zusätzliche Säule 10 Rechnung getragen, die in der Mitte zwischen diesen Schwellen angeordnet ist. Die Säulen 8, 9 und 10 haben in dem Beispiel eine Länge von etwa 12 cm und, von den Ecksäulen 9 aus gerechnet, jeweils einen Abstand zu der nächst inneren Säule von etwa 50 cm. Dies bedeutet, daß zwischen der zusätzlichen Säule 10 und den hierzu seitlich benachbarten Säulen 9' ein geringerer Abstand entsteht. Wenn, wie im dargestellten Beispiel, was sich aus Stabilitätsgründen besonders günstig erwiesen hat, die Säulen von ihrer Außenfläche bis zu den Seitenwandungsplatten 4 und 5 eine Breite von etwa 6 cm aufweisen,erhält man einen glattflächigen von ebenen Flächen begrenzten Innenraum mit gleichmäßiger rechteckförmiger und nahezu quadratischer Querschnittsfläche mit einer Breitenausdehnung von etwa 2,37 m und einer Höhe von etwa 2,50 m.

Die Seitenwände des Behälters sind allgemein durch die Bezugszeichen 15 und 16, die Stirnwände allgemein durch die

Bezugszeichen 17 und 18 angedeutet. Mit dem Bezugszeichen 19 und 20 sind die ebenen Seiteninnenwandungen, mit dem Bezugszeichen 21 und 22 die Stirninnenwandungen des Behälters bezeichnet, die gleichfalls eben sind.

Nach ihrem Zusammenbau werden die Behälter durch Sandstrahlen gereinigt und anschließend als Korrosionsschutz mit einer Epoxydharzschicht vollständig überzogen.

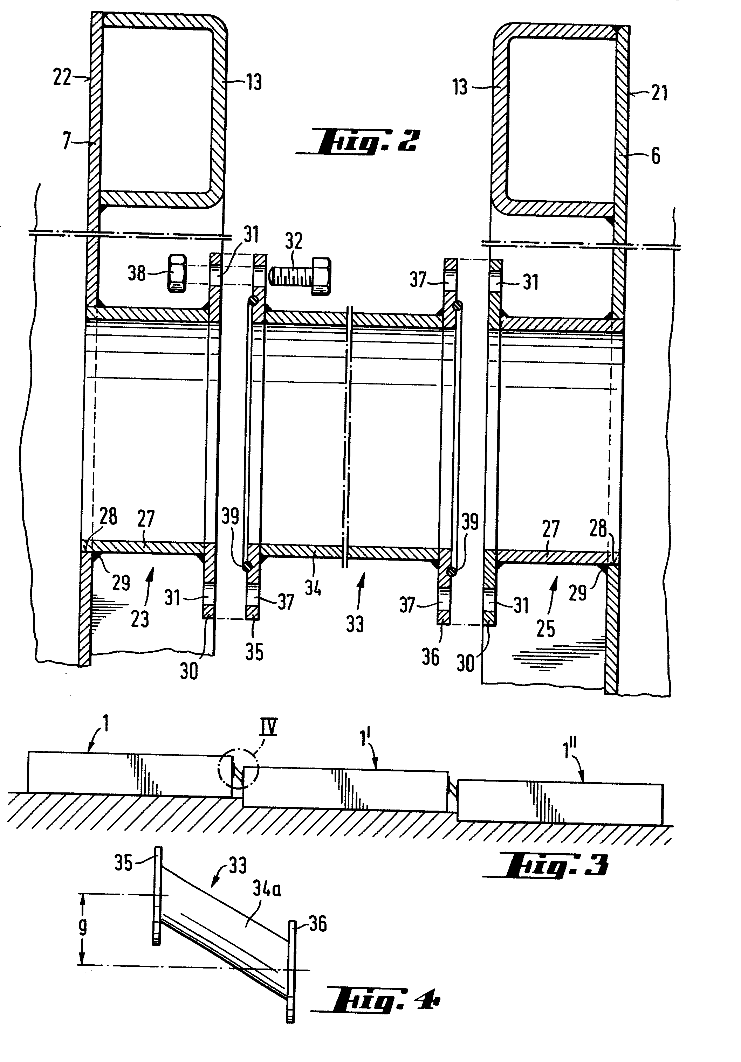

An den Stirnwänden 17 und 18 des Behälters 1 sind im Bereich der oberen Ecken zwischen den Ecksäulen 9 und der jeweils nächsten innenliegenden Säule 3 Anschluß- und Verbindungselemente 23 bis 26 angebracht, über welche aneinander anschließende Behälter miteinander verbunden und Strömungswege zwischen diesen hergestellt werden. Die Anschluß- und Verbindungselemente 23 und 26 bestehen, wie am besten aus der Schnittdarstellung von Fig. 2 hervorgeht, aus Rohrstutzen 27, welche in Durchgangsbohrungen 28 der Stirnwandungsplatten 6 bzw. 7 eingesetzt und mit diesen, wie durch das Bezugszeichen 29 angedeutet, fest verschweißt sind. Die Rohrstutzen 27 sind an ihren freien Enden mit kreisringförmigen Flanschen 30 versehen, welche über ihren Umfang verteilte Bohrungen 31 enthalten, durch welche Schrauben 32 hindurchsteckbar sind, welche dazu dienen, die Behälter zusammenzuschrauben. Die Steuerflächen der Flansche 30 fluchten, wie aus den Figuren 1c und 2 hervorgeht, mit den Stirnflächen der Verstärkung 13, der Säulen 8 und 9 sowie mit der stirnseitigen Kante der Bodenplatte und gegebenenfalls den darunter angrenzenden Seitenflächen der unter den Stirnseiten angebrachten Schwellen 3.

Falls die Behälter direkt mit ihren Stirnseiten aneinander anliegend verbunden werden sollen, werden in den Stirnwan-

0086489

dungsplatten 7 bzw. 8 den Bohrungen 31 genau gegenüberliegend weitere Bohrungen angebracht, wobei lange Schrauben durch diese Bohrungen und die Bohrungen 31 durchreichen, welche ein Verschrauben im Innern der Behälter ermöglichen. Durch geeignete Abdichtungsmittel wird verhindert, daß die Behälter über diesen Bohrungen lecken.

Normalerweise werden die Behälter jedoch, wie in Fig. 2 angedeutet, in einem definierten stirnseitigen Abstand voneinander durch Verbindungsstücke 33 aneinander angeschlossen, die aus einem mit seinen Querschnittsdimensionen den Rohrstutzen 27 entsprechenden Rohrstück 34 und stirnseitig auf dessen Enden angebrachten Endflanschen 35 und 36 bestehen, welche miteinander und mit den Bohrungen 31 fluchtende Bohrungen 37 enthalten, so daß sie, wie bei der Schraube 32 angedeutet, mittels dieser und Muttern 38 fest verschraubbar sind. Die Endflansche 35 und 36 können auf ihren zueinander parallelen Stirnflächen einen Dichtungsring 39 enthalten.

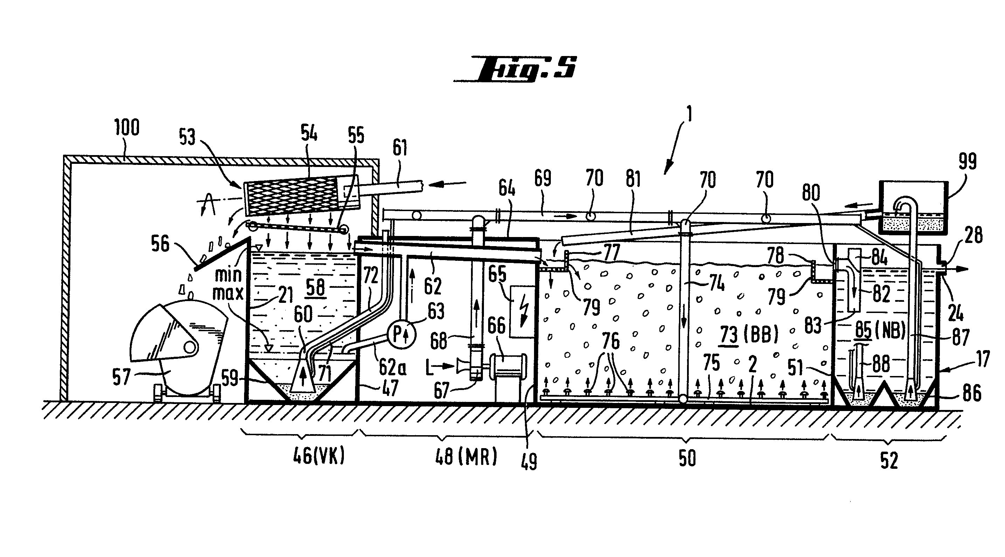

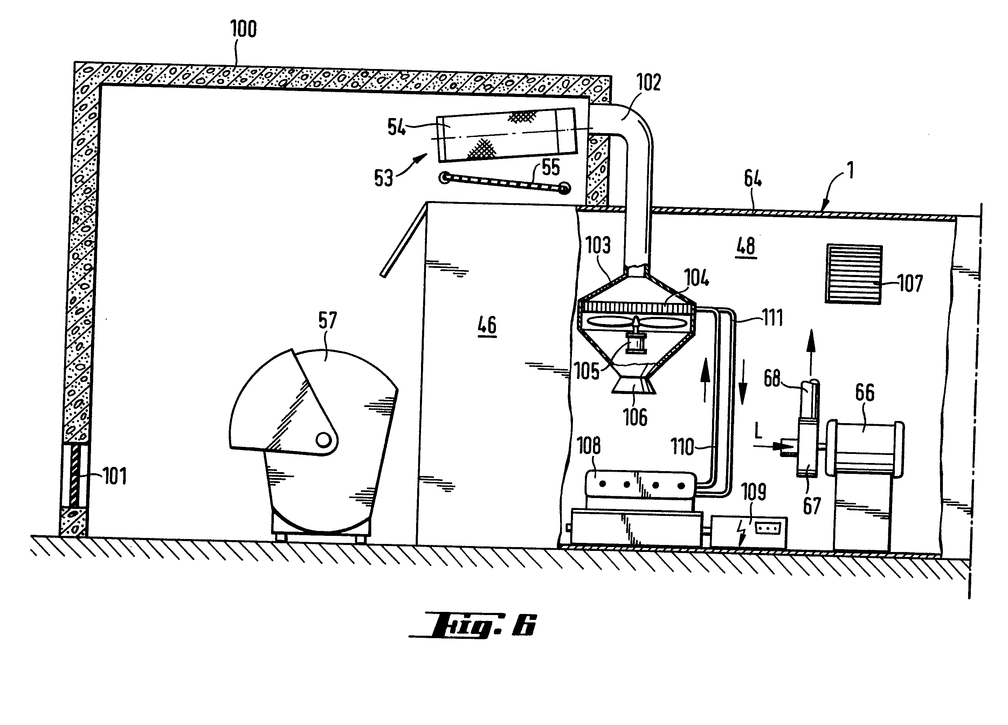

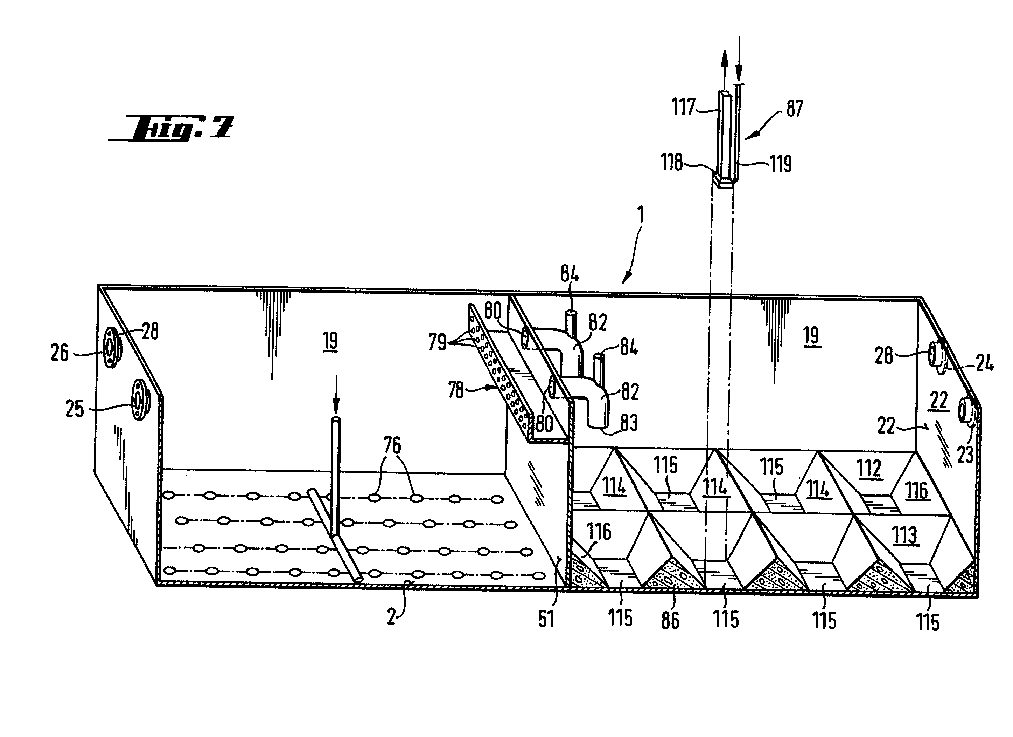

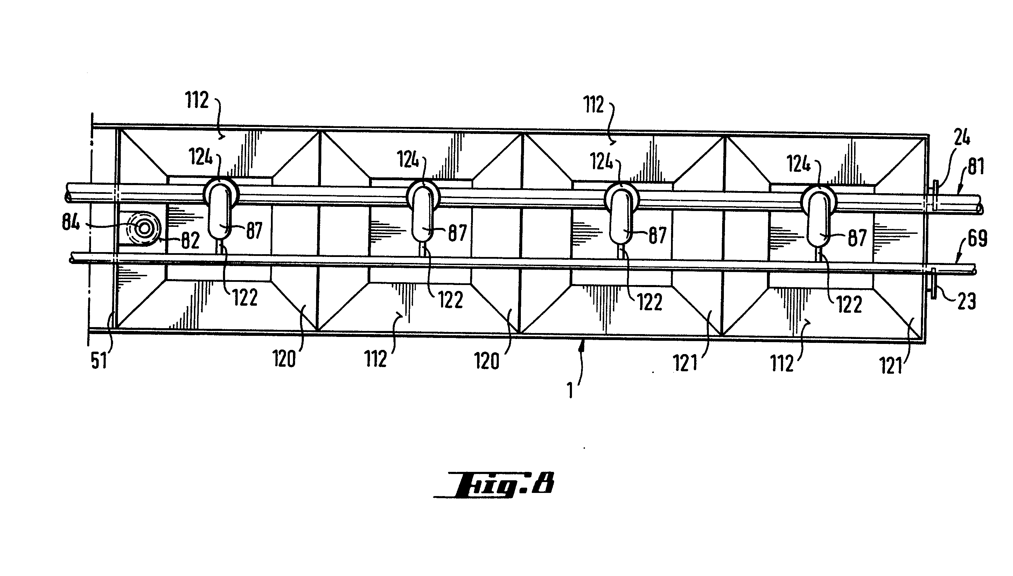

Da es vielfach erwünscht ist, zwischen stirnseitig einander gegenüberstehenden identischen Becken ein Gefälle herzustellen, können die Verbindungsstücke, wie in Fig. 4 angedeutet, mit einem zwischen den parallelen Endflanschen 35 und 36 schräg verlaufenden Rohrstück 34a versehen sein, welches das durch den Abstand g angedeutete Gefälle liefert. Bei Verwendung der in Fig. 4 gezeigten Verbindungsstücke 33 ergibt sich die in Fig. 3 schematisch angedeutete Anordnung aufeinanderfolgender Behälter 1, 1' und 1''. Wenn dagegen die Behälter, wofür im folgenden noch viele Beispiele angegeben werden, mit ihren Seitenwänden 15 und 16 direkt aneinander angrenzend zu einer Einheit verbunden werden sollen, kommen Verbindungsstücke 40 zur Anwendung, wie sie in Fig. 18 dargestellt sind, die aus zwei zueinander parallelen Ringflanschen 41 und 42 bestehen, die mittels eines U-förmig gebogenen Rohrstückes 43 miteinander verbunden sind. Die Rohrstücke 43 können, wie durch das Bezugszeichen 44 angedeutet, bezüglich des Abstands der Flansche voneinander verlängerbar ausgebildet sein. In den Flanschen sind in Umfangsrichtung derselben verlaufende schlitzförmige Durchbrüche 45 angebracht, so daß die Verbindungsstücke 40 auch dann zur Anwendung kommen können, wenn zwischen seitlich aneinander angrenzenden Behältern ein Gefälle gewünscht ist.

Die Durchgangsbohrungen 28 sind zweckmäßigerweise derart an den Stirnwandungen 17, 18 angebracht, daß ihre Mittelachsen von der Oberkante des Behälters einen Abstand von etwa 40 cm aufweisen. Der lichte Durchmesser in den Rohrstutzen 27 beträgt vorzugsweise etwa 14 cm.

Der Abstand der Durchgangsbohrungen 28 von den Seiteninnenwandungen 19 und 20 ist dagegen nicht kritisch, wobei jedoch für eine zur Mittellängsachse des Behälters symmetrische Anordnung Sorge zu tragen ist. Man wird die Durchgangsbohrungen jedoch möglichst nahe an den Außenwandungen anbringen, da die an ihnen befestigten Rohrstutzen 27 mit ihren Endflanschen 30 auch zum Transport der Behälter verwendet werden, indem man um die Rohrstutzen entsprechende Seilschlaufen oder Ketten herumlegt oder indem man durch sie Haken einhängt, welche bis in das Innere des Behälters hineinreichen.

Die vorbeschriebene Ausbildung der Behälter hat den Vorteil, daß sie relativ leicht und dabei äußerst stabil sind, glatte Innenwandungen und einen guten Flankenschutz liefern und bis zum Rand mit Flüssigkeit auffüllbar sind, ohne

0086489

daß es zu Verformungen oder Ausbauchungen kommt.

Der vorstehend beschriebene Behälter oder ein in Querschnittsdimension gleicher jedoch lediglich halb so langer Behälter wird mit unterschiedlichen Einbauten verwendet, um hieraus im Baukastenprinzip Kläranlagen der unterschiedlichsten Dimension zu erstellen. Jeder Behälter kann dabei entweder mehrere Funktionen oder nur jeweils eine Funktion übernehmen, was von den jeweiligen Einbauten und der erwünschten Klärleistung abhängt.

Im folgenden wird auf die Einbauten und weiteren konstruktiven Einzelheiten eingegangen, wobei jedoch der Behälter selbst in der Regel nur schematisch und ohne die vorstehend beschriebenen Einzelheiten dargestellt ist.

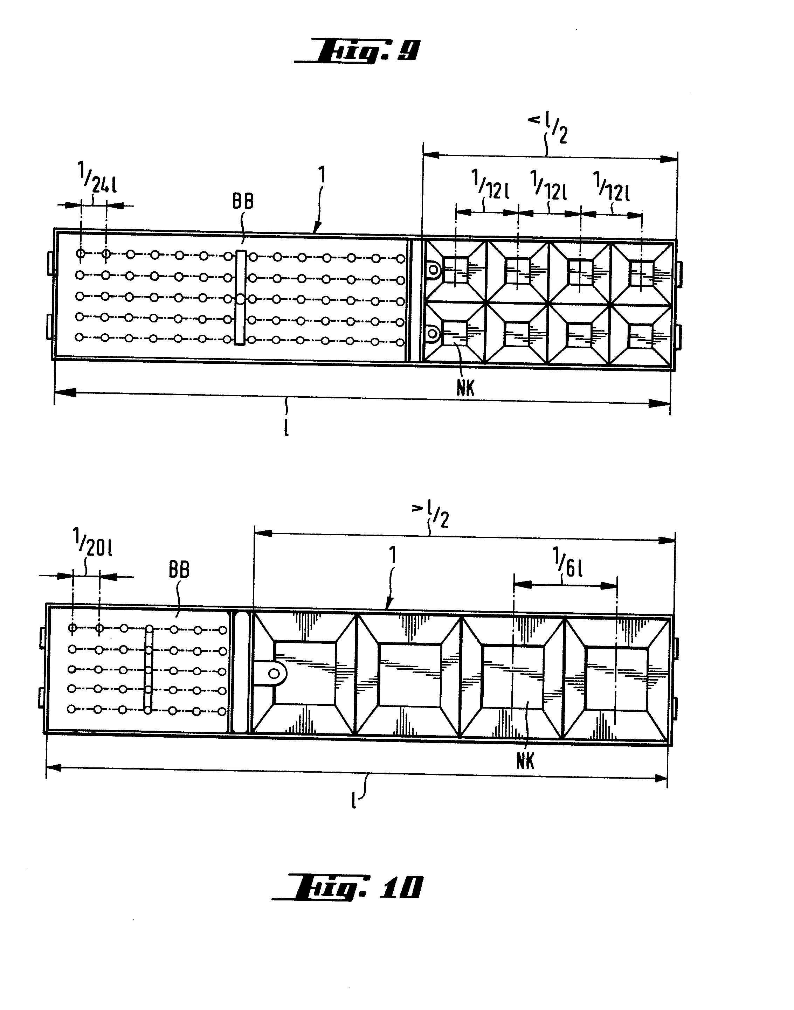

Fig. 5 zeigt im Längsschnitt den Behälter 1, wobei in ihm bei diesem Ausführungsbeispiel sämtliche Funktionen einer Kläranlage aufgenommen sind. Im aus der Sicht von Fig. 5 linken Bereich enthält der Behälter 1 eine Vorklärstufe 46, die mittels einer durchgehenden Querwand 47 gegenüber einem anschließenden Maschinenhaus 48 abgegrenzt ist. Das Maschinenhaus ist mittels einer durchgehenden Querwand 49 gegenüber einem Belebungsbereich 50 abgegrenzt, welcher mittels einer weiteren Querwand 51 gegenüber einem Nachklärbereich 52 abgegrenzt ist.

Die Vorklärstufe 46 besteht aus einer durch das Bezugszeichen 53 angedeuteten Siebmaschine, welche einen in einer Siebtrommel 54 umlaufenden, nicht näher dargestellten Abstreifer enthält, der das grobe Siebgut über eine Abwurfeinrichtung 55 und gegebenenfalls eine Rutsche 56 zu einem an der Stirnkante des Behälters 1 angeordneten Abfallbehälter 57 austrägt. Von der Stirninnenwand 21 des Behälters, Teilen der Seiteninnenwände 19 und 20 und der Querwand 47 wird ein Vorklärbecken 58 begrenzt, das in seinem unteren Bereich trichterförmige Einbauten 59 enthält, in welche eine sogenannte Mammutpumpe 60 als Schlamm- und Sandheber hineinreicht. Über eine Zulaufdruckrohrleitung 61 wird das zu klärende Abwasser in die Siebtrommel 54 eingebracht und dort vom Grobstoff gereinigt, wonach es in das Vorklärbecken 58 gelangt.

An der Oberseite des Vorklärbeckens 58 mündet ein Rohr 62, das durch oder über dem Maschinenhaus 48 in den Belebungsbereich 50 führt und dort mündet. Das Rohr 62 weist ein Gefälle von einigen Zentimetern auf.

In das Rohr 62 mündet des weiteren eine in dem unteren Bereich des Vorklärbeckens 58 hineinragende Rohrleitung 62, in die eine Pumpe 63 und ein nicht näher gezeigtes Absperrventil eingesetzt sind. Mittels der Pumpe 63 kann das Vorklärbecken 58 bis zu dem durch den Pfeil "min" angedeuteten minimalen Niveau entleert werden.

Das Maschinenhaus 48 ist auf seiner Oberseite mittels einer Wandung geschlossen. In ihm sind ein Schaltschrank 65, ein Motor 66 und ein Kompressor 67 angebracht, sowie im dargestellten Falle auch die Pumpe 63. Der Kompressor 67 saugt, wie durch den Pfeil L angedeutet, Luft an und komprimiert diese. Die Druckluft wird anschließend über ein Rohr 68 zu einem zentralen Verteilerrohr 69 geleitet, das auf der Oberseite des Behälters an diesem entlangführt. Das zentrale Verteilerrohr enthält eine Reihe von Anschlüssen 70 und ist an seinen rückwärtigen Enden abgeschlossen. Aus dem Verteilerrohr 69 führt an seinem aus der Sicht von Fig. 5 linken Ende eine Druckluftleitung 71 zu einem das untere Ende der Mammutpumpe 60 bildenden Trichter, der das aus Luft und Schlamm bestehende Gemisch über eine Leitung 72 nach oben pumpt, von wo es in einen Schlammbehälter oder gegebenenfalls auch in ein Nachklärbecken geleitet wird.

Der Belebungsbereich 50 besteht aus einem Belebungsbecken 73, das von einem Teil der Bodenplatte 2, der Seiteninnenwandungen 21 und 22 sowie den Querwandungen 49 und 51 begrenzt ist. In der Mitte des Belebungsbeckens 73 führt eine Anschlußleitung 74 zu einem am Boden des Belebungsbeckens 73 angebrachten Rohrgerüst 75, dessen Inneres auf diese Weise mit Druckluft beaufschlagbar ist. Auf der Oberseite der Rohre des Rohrgerüsts 75 sind Belüftereinheiten, im dargestellten Falle sogenannte Dombelüfter 76 angebracht, aus denen die Druckluft in das zu klärende Abwasser hineinperlt, so daß dieses dort nach dem sogenannten Belebtschlammverfahren biologisch gereinigt wird. Das Belebtschlammverfahren und dessen Mechanismus sind bekannt, so daß hierauf nicht näher eingegangen werden muß.

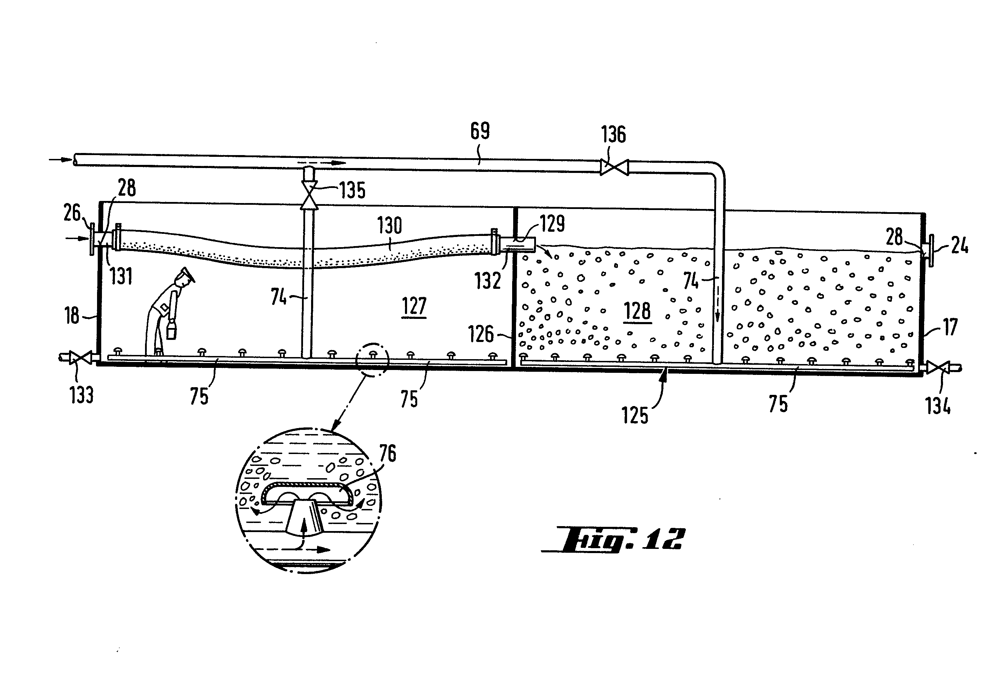

Am Einlauf zu dem Belebungsbecken 73 und am Auslauf desselben ist längs der Querwände 49 und 51 je eine Rinne 77 bzw. 78 angebracht, die sich zwischen den Seiteninnenwandungen 19 und 20 erstrecken. Die Rinnen tragen auf ihrer dem Belebungsbecken 73 zugekehrten Seite, was im einzelnen in Fig. 7 gezeigt ist, eine Lochung 79. Hierdurch wird eine Pufferung des Zulaufs und des Ablaufs zu dem Belebungsbecken 73 erreicht, da bei einem plötzlichen Anstieg des Flüssigkeitspegels zunächst ein größerer Durchflußquerschnitt freigesetzt wird, bevor die Flüssigkeit schließlich über die Rinnenoberkante strömt. In der Trennwand 51 zwischen dem Belebungsbecken 73 und dem anschließenden Nachklärbereich 52 sind im Bereich der Rinne ein oder zwei Durchflußöffnungen 80 angebracht, die durch ihre Lage und im Zusammenwirken mit der Rinne 78 den Flüssigkeitspegel in dem Belebungsbecken 73 bestimmen. In die Rinne 77 mündet des weiteren ein Gerinne bzw. ein Rohr 80, welches von dem Nachklärbereich 52 den dort abgesetzten und abgezogenen Schlamm dem Belebungsbecken 73 zurückführt.

Das aus dem Belebungsbecken über die Rinne 78 und die Öffnungen 80 ausfließende Abwasser-Schlammgemisch wird mittels eines Rohrbogens 82 nach unten umgelenkt, wobei es an einer unter der Oberfläche des Nachklärbeckens mündenden Austrittsöffnung 83 in das Belebungsbecken eintritt. Nach oben geführte Rohrstutzen 84, welche über dem Flüssigkeitsspiegel enden, ermöglichen einen Austritt von Luft, die sich bei der Einführung der Flüssigkeit in das Nachklärbecken abscheidet.

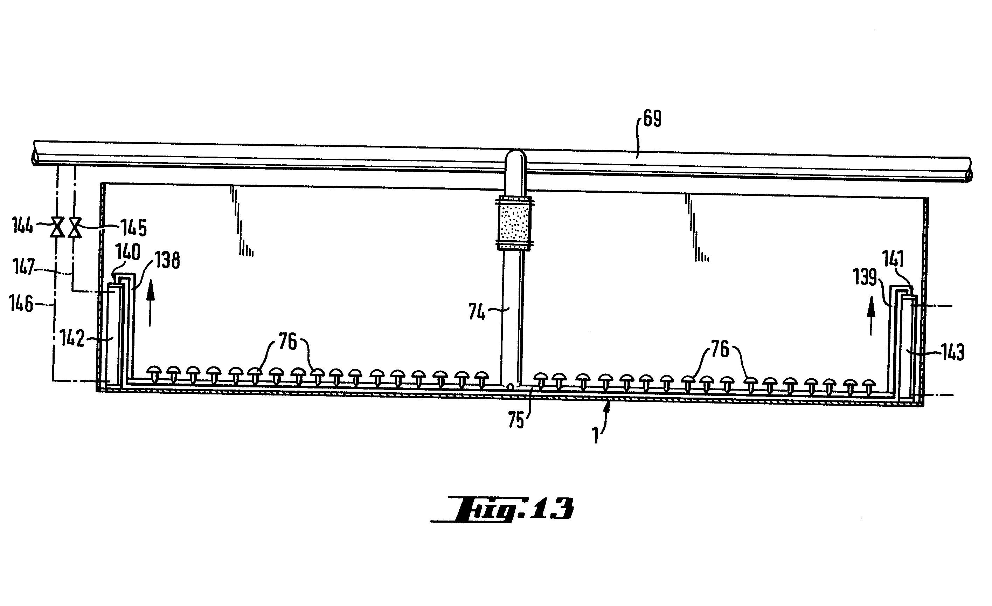

Der Nachklärbereich 52 besteht aus einem Nachklärbecken 85, das von der Stirninnenwandung 22, Teilen der Seiteninnenwandung 19 und 20 sowie der aus der Sicht von Fig. 5 rechten Wandung der Querwand 51 gebildet ist. Am Boden des Nachklärbeckens 85 sind schlammtrichterartige Einbauten 86 vorgesehen, auf die im folgenden anhand der Fig.7 und 8 noch näher eingegangen wird. Schlammheber 87 und 88, die ähnlich ausgebildet sind wie die Mammutpumpe 60, reichen zwischen den schlammtrichterartigen Einbauten 86 bis in die Nähe des Bodens des Nachklärbeckens 85 hinab, um den sich dort absetzenden Schlamm in einen Behälter 99 zu heben, aus dem er in das Rohr 81 und von dort über die Rinne 77 in das Belebungsbecken 73 gelangt. Der Überschußschlamm kann in einen nicht näher dargestellten Eindickbehälter oder in Schlammeintrocknungsbecken abgeführt werden. Das geklärte

0086489

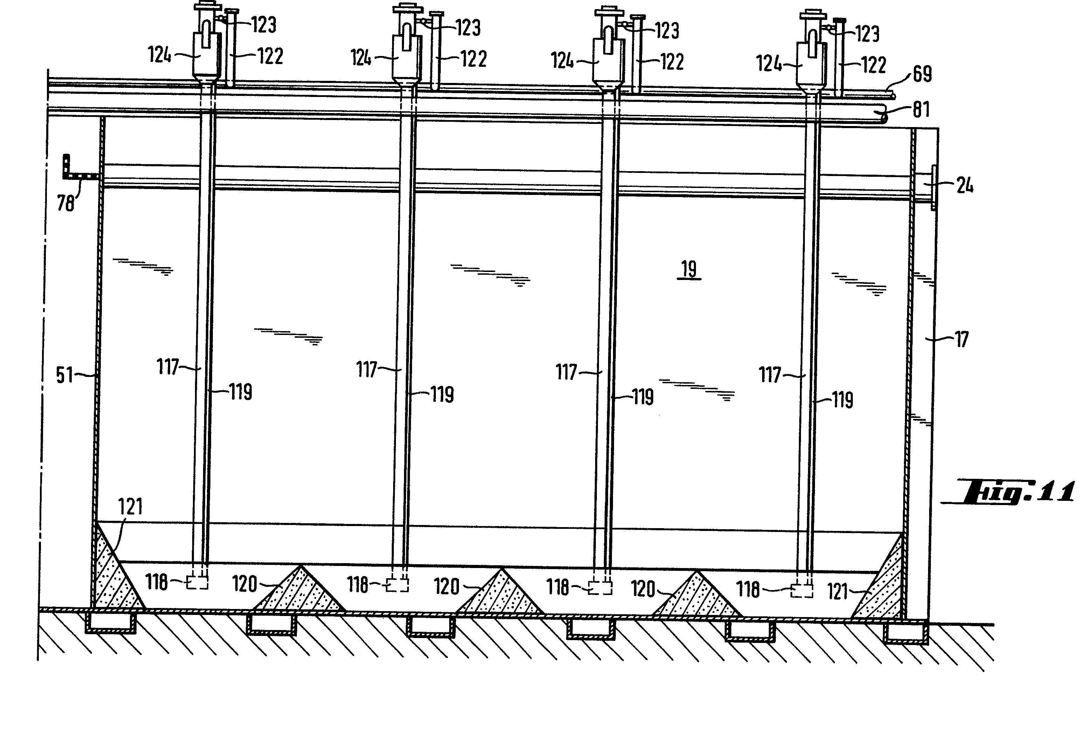

Wasser tritt an der Stirnseite 17 aus dem Behälter über die Durchgangsbohrung 28 aus. Der Vorklärbereich 46, der Abfallbehälter 57 sowie die Siebmaschine 53 sind in einem Gehäuse 100 aufgenommen. Das Gehäuse 100 enthält, wie näher aus Fig. 6 hervorgeht, eine Lufteintrittsöffnung 101. In seinem oberen Bereich, benachbart zu der Siebtrommel 57, mündet des weiteren ein Kanal 102, der durch die Wandung 64 in das Innere des Maschinenhauses 48 führt. Der Kanal 102 führt durch ein Gehäuse 103, das einen Wärmetauscher 104 und einen in der Förderrichtung umkehrbaren Ventilator 105 enthält, und mündet in einem zu dem Maschinenhaus 48 offenen Trichter 106. Das Maschinenhaus enthält des weiteren eine verschließbare Lüftungsöffnung 107. Ein Verbrennungsmotor 108 treibt einen Generator 109 an, von dem der Elektromotor 66 für den Kompressor 67 betätigt wird. Der Wärmetauscher 104 ist über Leitungen 110 und 111 an den Kühlmittelkreislauf des Motors 108 über ein nicht näher gezeigtes Absperrglied wahlweise anschließbar.

Bei hohen Außentemperaturen kann es im Bereich der Vorklärstufe 46 zu einer Geruchsbelästigung kommen, da die abgeschiedenen groben Abfallstoffe mit organischen Abfällen behaftet sind, welche zu faulen beginnen. Eine Geruchsbelästigung der Umgebung wird dadurch verhindert, daß man über den Kanal 102 die vom Kompressor verdichtete Luft L ansaugt, wobei die Lüftungsöffnung 107 geschlossen ist. Der Ventilator 105 unterstützt diesen Vorgang.

Im Winterbetrieb besteht dagegen die Gefahr, daß die Vorklärstufe einfriert, insbesondere im Bereich der Siebmaschine 53. Durch eine Umkehr der Förderrichtung des Ventilators 105 wird in diesem Falle bewirkt, daß im Maschinenhaus 48 vorgewärmte Luft, die in dieses durch die dann geöffnete Lufteintrittsöffnung 107 einströmt, über den Kanal 102 in das Gehäuse 100 gelangt, wobei diese Luft durch Einschalten Wärmetauschers 104 in den Kühlmittelkreislauf des Motors 108 bzw. auch des Kompressors 67 oder des Motors 66 weiter erwärmt wird.

Fig. 7 zeigt im einzelnen die schlammtrichterartigen Einbauten 86 eines Nachklärbeckens. Längs der Seiteninnenwandungen 19 und 20 sind hierzu durchlaufende Rutschflächen 112 angebracht, die aus vorgefertigten Teilen bestehen können und von den Seiteninnenwandungen zu dem Boden in einem $45^{\circ}$ Winkel verlaufen. In der Mitte zwischen den längs bei der Seitenwandung verlaufenden Rutschflächen und parallel zu diesen ist ein Dreiecksprofil 113 eingebracht, dessen schräg verlaufende Rutschflächen den Rutschflächen 112 gegenüberliegen. Mittels weiterer Dreieckprofilelemente 114 werden die zwischen den Rutschflächen 112 und dem Dreiecksprofil 113 gebildeten Gräben in Querrichtung unterteilt, so daß einzelne trichterartige Bereiche 115 entstehen, deren Seitenwandung sich zu der Bodenplatte hin verjüngen. Anstelle der Dreieckselemente 114 können an den Stirnflächen des Nachklärbeckens entsprechende Halbelemente 116 angebracht sein. Allgemein empfiehlt es sich, die Rutschflächen 112 und auch das Dreiecksprofil 113 durch Einschweißen entsprechender Längsbleche zu erstellen. Die Dreiecksprofilelemente 114 sowie die Halbelemente 116 sind dagegen vorzugsweise vorgefertigte Teile, die einfach auf dem Boden des Nachklärbeckens an die gewünschten Stellen gelegt werden. Sie können aus Betonsteinen bestehen und gegebenenfalls auch aus Transportgründen aus losen Einzelteilen zusammenfügbar sein.

In die Trichter 115 wird jeweils , wie in Fig. 7 für einen dersel-

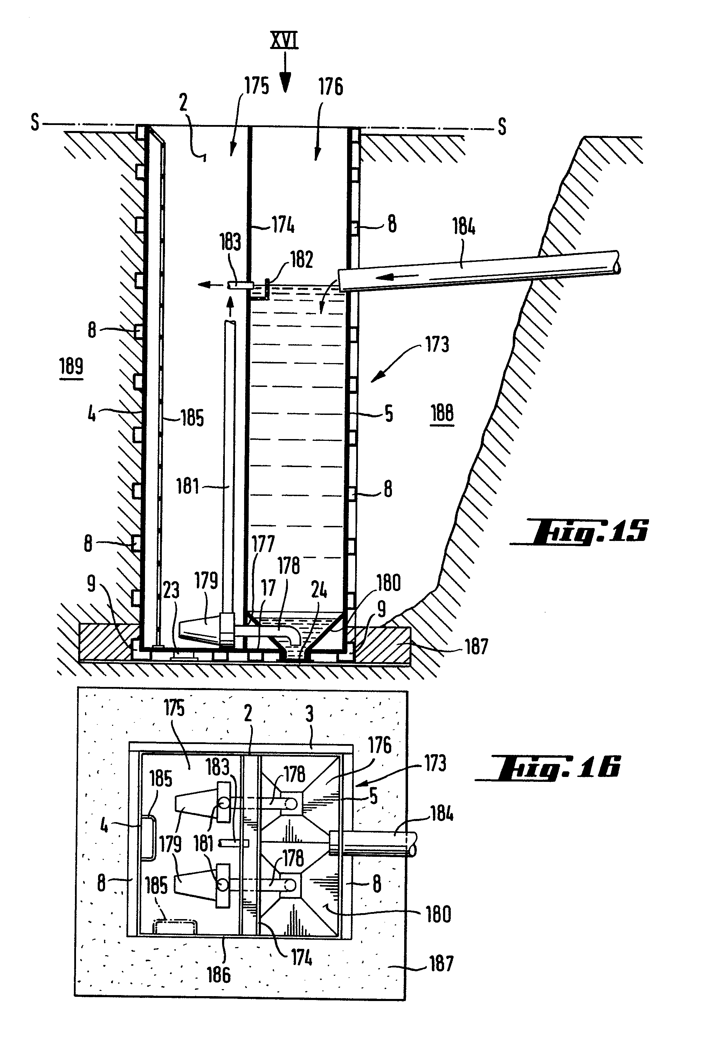

ben angedeutet ist, ein Schlammheber 87 eingesetzt, der aus einem Rohr 117 mit einem am unteren Ende desselben angebrachten Trichter 118 besteht, in den eine Druckluftleitung 119 mündet. Die Schlammheber, die bei dem in Fig. 7 gezeigten Beispiel paarweise nebeneinander angeordnet sind, werden von der zentralen Druckluftleitung 69 in der vorstehend beschriebenen Weise versorgt. Bezüglich Einzelheiten wird auf die Fig. 8 und 11 und zugehörigen Text verwiesen.

Bei der in Fig. 6 dargestellten Ausführungsform der Nachklärbecken, welche dann zur Anwendung kommt, wenn die Länge der Nachklärbecken größer ist, als die halbe Innenlänge eines Behälters, sind die Dreiecksprofile 113 weggelassen. In ihren Dimensionen vergrößerte Dreiecksprofilelemente 120, welche aus zwei Halbstücken 121 zusammengesetzt sein können, begrenzen hier zusammen mit den Rutschflächen 112 nahezu quadratische Trichterbereiche, deren Kantenlänge der Innenbreite der Behälter entspricht. In die Mitten jedes dieser trichterförmigen Bereichen reicht ein Schlammheber 86 hinab, der über Anschlußleitungen 122 an das zentrale Verteilerrohr 69 für die Druckluft angeschlossen ist. Über ein gegebenenfalls programmgesteuertes Ventil 123 und die Leitungen 119 wird die Druckluft zu den Trichtern 118 hinabgeleitet, welche in den von den Rutschflächen 112 und den Dreiecksprofilelementen 120 festgelegten trichterförmigen Bereichen hängen. Über die Rohre 117 wird das Schlammluftgemisch nach oben ausgetragen, wobei es in trichterförmige oben offene Behälter 124 einfließt in denen eine Trennung zwischen der Luft und dem Schlamm stattfindet. Die trichterförmigen Behälter 124 münden in das Rohr 81, welches den Schlamm abführt. Man erkennt aus Fig. 8, wie die Rohre 69 und 81 auf der Oberseite der Behälter

0086489

verlegt sind. Sie sind hierbei gut zugänglich und gegenüber Beschädigungen gesichert.

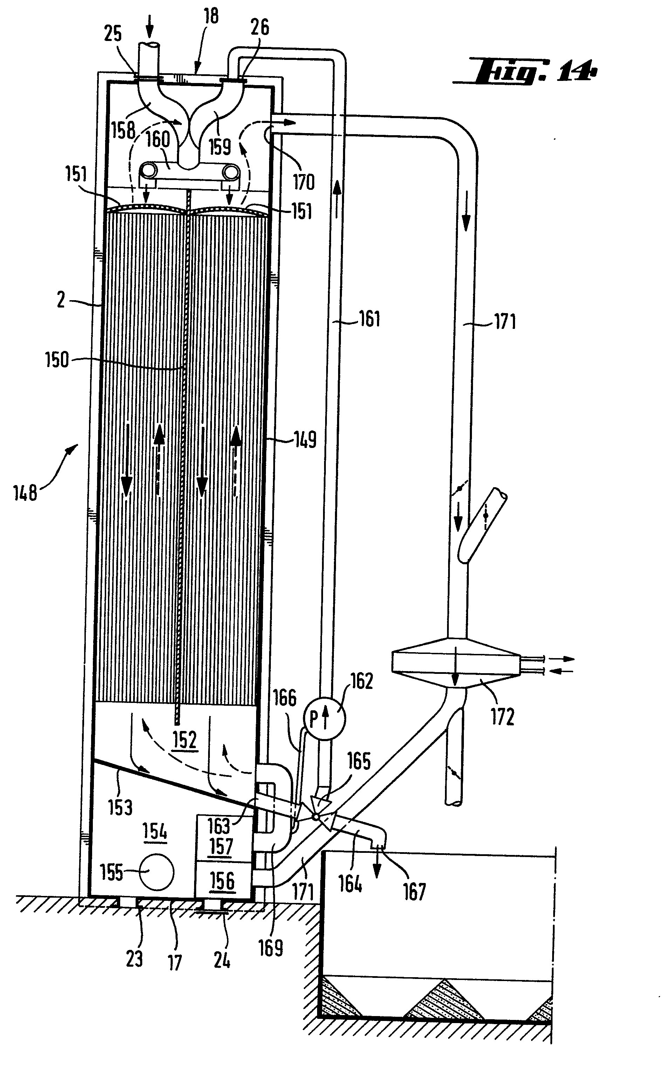

Fig. 9 und 10 zeigen Grundrißansichten des Behälters und
erläutern verschiedene besonders zweckmäßige Möglichkeiten
für die Anbringung der Einbauten in diesen, wenn man die
Längen der Belebungsbecken und der Nachklärbecken und die
Längen der Belüfter bzw. Schlammhebereinheiten entsprechend
einem geeigneten Rastermaß wählt. Bei der in Fig. 9 gezeigten Ausführungsform weist das Belebungsbecken BB ein Vielfaches eines Grundrasters von 1/24 auf, wobei J die Innenlänge des Behälters ist. Auch die Belüftereinheiten entsprechen diesen Rastern von 1/24. Diese Rastereinteilung
ermöglicht es bei Verwendung von Fertigelementen für die
Belüftereinheiten den jeweils benötigten Belebungsraum im
Rahmen des einzelnen Behälters nahezu beliebig zu wählen,
ohne daß hierbei Sonderanfertigungen benötigt sind. Das
Nachklärbecken NK besteht aus einem Vielfachen eines Grund-
rasters, das 1/12 beträgt, wenn die Gesamtlänge des Nachklärbeckens kleiner ist als 1/2, da in diesem Falle wie in
Fig. 7 bereits gezeigt, jeweils zwei nebeneinander liegende
Schlammheber eingesetzt werden, durch die das relativ kleine
zur Verfügung stehende Beckenvolumen besonders günstig ausgenutzt wird. Die Aufteilung eines Beckenraums in Belebungsbecken und Nachklärbecken ist in diesem Falle besonders einfach, da durch ein Weglassen von einem Raster im
Nachklärbecken, d.h. von zwei nebeneinander stehenden Schlammhebern zwei Reihen von Dombelüftern zusätzlich einbringbar sind. In entsprechender Weise läßt sich der Nachklärbereich zu Ungunsten der Belebungsbecken vergrößern, einschließlich des Grenzfalles, daß der gesamte Behälter vollständig als Belebungsbecken oder als Nachklärbecken dient.
Auch die Bleche der Rutschflächen 112 bzw. die Dreiecksprofile können in Stücken, welche dem Rastermaß entsprechen, vorgefertigt und gelagert werden.

Bei der in Fig. 10 gezeigten Ausführungsform ist das Nachklärbecken NK größer als die halbe Innenlänge des Behälters 1. Es ist zwar auch hier möglich die in den Fig. 7 und 9 gezeigte Anordnung von Schlammhebern zu verwenden. Aus Kostengründen empfiehlt sich jedoch die Fig. 10 gezeigte Lösung, bei der die Länge des Nachklärbeckens aus einem Vielfachen eines Rasters von 1/6 besteht und jede Schlammhebereinheit ebenfalls dieses Rastermaß aufweist. Diese Rastereinteilung entspricht der Draufsicht auf den Behälter von Fig. 8. In dem linken Teil des Behälters von Fig. 10 befindet sich ein Belebungsbecken, dessen Länge ein Vielfaches von einem anderen Raster ist, das sich für eine wirksame Belüftung besonders eignet. Dieses Raster beträgt 1/20. Die Belüfteeinheiten sind hier selbstverständlich im gleichen Rastermaß ausgebildet.

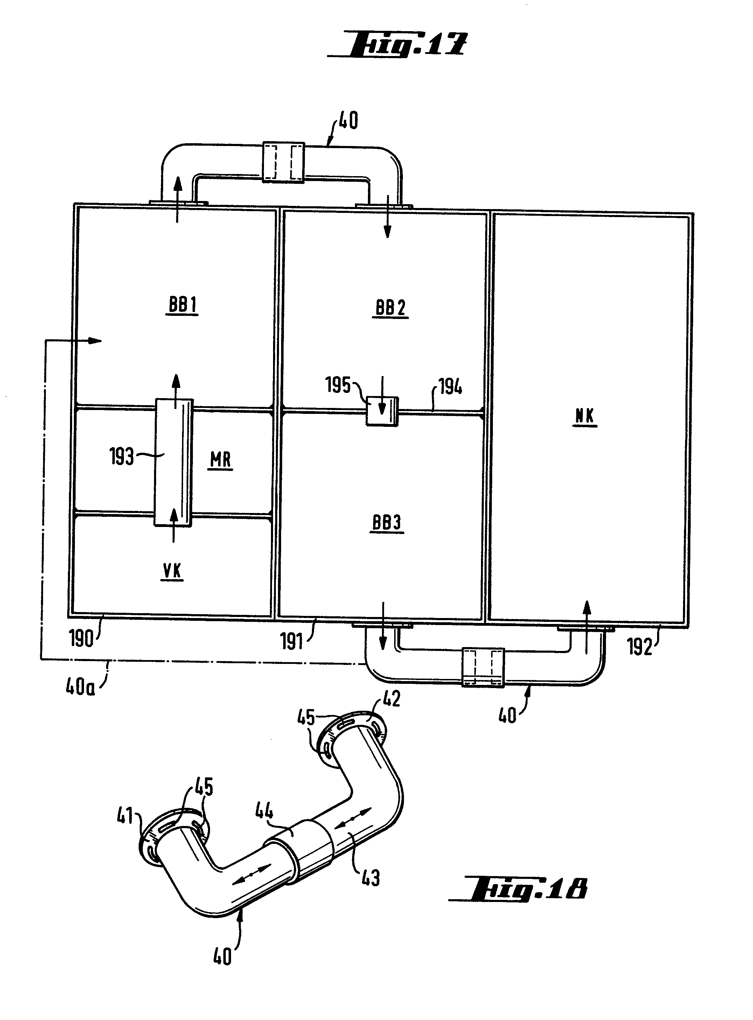

Fig. 12 zeigt einen schematischen Längsschnitt durch einen Behälter 125, der vollständig als Belebungsbecken ausgebildet ist. Der Behälter ist in seiner Mitte mittels einer Querwand 126 in zwei Teilbecken 127 und 128 unterteilt, welche über eine auf gleicher Höhe wie die Durchgangsbohrungen 28 liegende Durchgangsöffnung 129 miteinander in Verbindung stehen, so daß das über das Anschlußelement 26 eintretende Abwasser nach Auffüllen des Teilbeckens 127 das Teilbecken 128 füllt und anschließend über die Durchgangsbohrung 28 in den Anschlußelement 24 wieder austritt. Ein biegsamer Schlauch 130 ist an seinen freien Enden mit Anschlußelementen 131 und 132 versehen, welche in die Durchgangsöffnungen 28 bzw. 129 derart einsetzbar sind, daß sie mit diesen dichtend abschließen. Durch die Verwendung des biegsamen Schlauchs 130 gelingt es, wie beispielsweise für das linke Teilbecken 127 der Fig. 12 gezeigt, dieses zu überbrücken, so daß das in dem Behälter 125 einfließende Abwasser direkt in das Teilbecken 128 strömt. Das Teilbecken 127 kann daher über

- 36 -

0086489

ein im Bodenbereich angebrachtes Auslaßventil 133 entleert werden, so daß etwaige notwendig Wartungsarbeiten an dem Rohrgerüst 75 oder den Belüftern 76 ohne Unterbrechung der Anlage vorgenommen werden können. Da auch das Teilbecken 128 mit einem entsprechenden Auslaßventil 134 versehen ist, kann beispielsweise nach einer Reinigung des Teilbeckens 127, welche von der dort angedeuteten Person 135 beispielshalber vorgenommen wird und der anschliessenden Wiederinbetriebnahme dieses Teilbeckens, das Teilbecken 128 überbrückt, entleert und anschließend ebenfalls gewartet werden kann. Ventile 135 und 136, die in den von dem zentralen Verteilerrohr 69 für die Druckluft abzweigenden Anschlußleitungen 74 vorgesehen sind, ermöglichen bei der Wartung eine selektive Abschaltung der Druckluftzufuhr in den Teilbecken.

Eine weitere Möglichkeit für eine Wartung an den Belüftereinheiten in den Belebungsbecken ist in Fig. 13 dargestellt. Bei dieser Ausführungsform ist die Anschlußleitung 74, welche zu dem die Dombelüfter 76 tragenden Rohrgerüst 75 führt, über einen flexiblen Schlauch 137 und gegebenenfalls ein nicht näher gezeigtes Absperrventil an das zentrale Verteilerrohr 69 für die Druckluft angeschlossen. Das Rohrgerüst 75 ist mittels an seinen äußeren Enden angebrachter Verbindungsglieder 138 und 139 an die Hubstange 140 bzw. 141 je eines Hubzylinders 142 bzw. 143 befestigt, der über Ventile 144, 145 und strichliert angedeutete Druckluftleitungen 146, 147 betätigbar ist. Die Druckluftleitungen 146 und 147 sind an an das zentrale Verteilerrohr 69 angeschlossen. Durch eine Beaufschlagung der Hubzylinder 142 und 143 mit Druckluft, läßt sich das Rohrgerüst 75 bis zu der Oberfläche der in dem Behälter befindlichen Flüssigkeit anheben, so daß diese zu Wartungszwecken nicht ausgelassen werden muß. Auch die Unterteilung des Belebungsbeckens in zwei Teilbecken kann bei dieser Ausgestaltung entfallen.

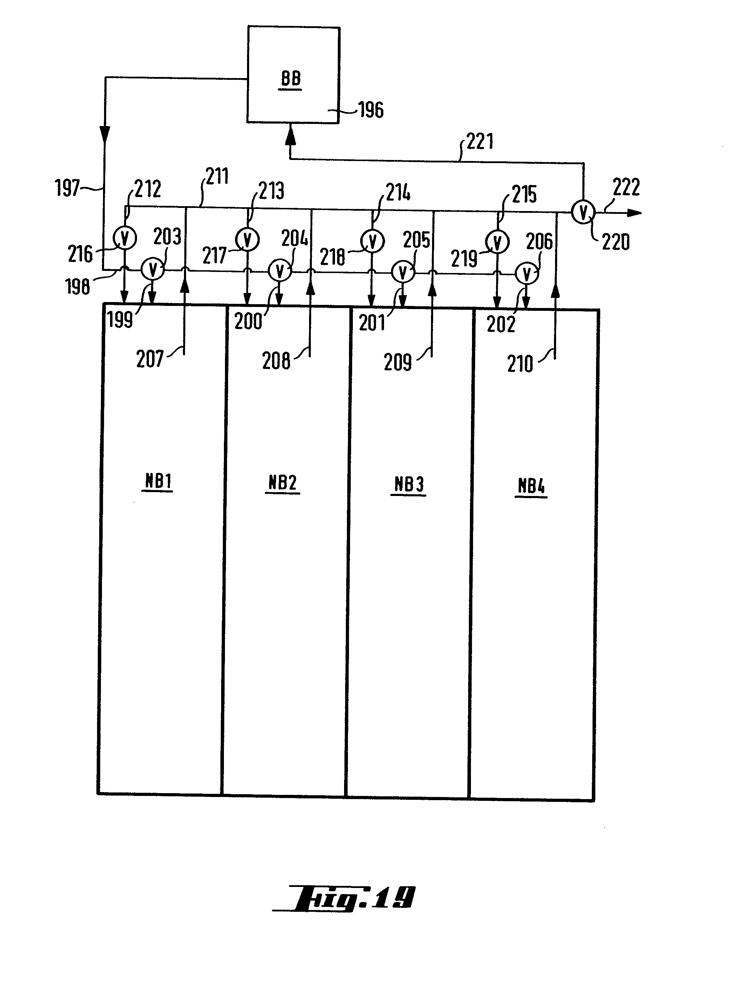

Fig. 14 zeigt eine weitere Verwendungsmöglichkeit des Behälters in dem dieser als Rieselturm 148 eingesetzt ist. Der Behälter, der an seinem Einsatzort wie aus Fig. 14 ersichtlich aufrecht auf seine Stirnwand 17 gestellt wird, ist an seiner Oberseite mit einer Platte 149 verschlossen. In seinem Mittelbereich und parallel zu der Bodenplatte 2 ist eine die beiden Seiteninnenwandungen 19 und 20 verbindende Längswand 150 eingebaut. Eine weitere senkrecht zu dieser verlaufende zwischen der Bodenplatte 2 und der die Oberseite des Behälters verschließenden Platte 149 verlaufende Längswand, die aus Fig. 14 nicht ersichtlich ist, unterteilt damit die Querschnittsfläche des Behälters in vier Längskanäle. Die aus der Sicht von Fig. 14 oberen Enden der Längskanäle enthalten Rieselsiebe 151, welche in Richtung die Stirnwand 18 des Behälters leicht konvex gekrümmt sind. Das entgegengesetzte, aus der Sicht von Fig. 14 unteren Ende der Kanäle mündet in einen Raum 152, dessen Unterseite von einer Trennwand 153 gebildet wird, die von der Bodenplatte 2 aus der Sicht von Fig. 14 schräg nach unten         in Richtung auf die die Oberseite verschließende Platte 149 verläuft. Die Trennwand bildet die Decke eines zwischen dieser und der Stirnwand 17 gegelegenen Maschinenraums 154, der eine Pumpe 155, einen Motor 156 und einen Kompressor 157 enthält. Die Anschlußelemente 23 und 24 können zum Ablaufen von Kondenswasser oder für die Zufuhr von Frischluft in den Maschinenraum verwendet sein.

Die Anschlußelemente 25 und 26 an der gegenüberliegenden Stirnwand 18 sind über Rohrstücke 158, 159 an einen Verteiler 160 angeschlossen, der das zu klärende Abwasser auf die einzelnen Rieselsiebe 151 verteilt. An dem Anschlußelement 25 ist die Zuführungsleitung für das ungeklärte Abwasser angeschlossen, an dem Anschlußelement 26 eine Rückführungsleitung 161, über die von einer Pumpe 162 die am unteren Ende des Raumes 152 über eine Austrittsöffnung 163 in der Platte 149 und in ein Rohr 164 austretende Wasser-Schlammischung, geregelt durch ein in dem Rohr 164 angebrachtes Dreiwegeventil 165, zurückgepumpt werden kann. Die Pumpe 162 wird durch Druckluft betätigt, wozu sie über eine Leitung 166 an dem Kompressor 157 angeschlossen ist. Der Überschußschlamm wird über das freie Ende 167 des Rohres 164 in ein darunter stehendes Nachklärbecken 168 geleitet.

Der Rieselturm 148 wird im Gegenstrom zu dem Abwasser von Druckluft durchströmt, welche von dem Kompressor 157 über eine Leitung 169 in den Raum 152 gelangt. Am oberen Ende des Rieselturmes 148 wird die Luft über eine Öffnung 170 abgesaugt und über eine Rohrleitung 171, in die zum Verhindern eines Einfrierens ein Wärmetauscher 172 einsetzbar ist, zurück zu dem Kompressor geleitet. Die gesamten Rohrleitungen, sowie die Ein- und Auslässe in den Behälter, mit Ausnahme der an seiner Stirnseite vorgesehenen, sind auf der Platte 159 angebracht. Es ist damit besonders einfach möglich einen wahllos aus der laufenden Fertigung genommenen Behälter als Rieselturm auszurüsten.

Die Fig. 15 und 16 zeigen zwei Ansichten von einer weiteren Verwendungsmöglichkeit des Behälters als Abwassersammelbecken. Die in den Fig. 15 und 16 dargestellten Abwassersammelbecken werden vorzugsweise paarweise hergestellt, indem die aus Fig. 15 ersichtlichen Einbauten jeweils an beiden Enden eines der üblichen Behälter eingebracht werden, das heißt spiegelbildlich zu der durch die Bezugszeichen S-S in Fig. 15 angedeuteten Mittelebene.

Nach Einbringung dieser Einbauten, was im folgenden für die eine Hälfte näher erläutert wird, erfolgt eine Trennung der beiden Hälften längs der als Sollbruchstelle ausgebildeten Schweißnaht 11, wobei in diesem Falle auch die Säule 11 weggelassen ist. Man erhält auf diese Weise zwei Abwassersammelbecken, von denen in Fig. 15 und Fig. 16 eines mit dem Bezugszeichen 173 dargestellt ist. Bei größeren Anlagen, in mehrere Abwassersammelbecken notwendig sind, wird der Behälter ohne vorher die Trennung vorzunehmen zu dem Einsatzort wie alle übrigen Behälter der Kläranlage transportiert und erst dort in die beiden Abwassersammelbecken unterteilt.

Das Abwassersammelbecken 173 enthält eine durchlaufende Längstrennwand 174, auf deren einen Seite ein Einstiegsschacht 175 und auf deren anderen Seite das eigentliche Sammelbecken 176 entsteht.

Die parallel zu den Seitenwandungsplatten 4 und 5 des Behälters verlaufende Längstrennwand 174 enthält an ihrem unteren Ende eine Öffnung 177, durch welche das Ansaugrohr 178 einer Pumpe 179 dichtend hindurchreicht, welche auf der Seitenwand 17 des Behälters befestigt ist. In die von dem Anschlußelement 24 gebildete Öffnung ist ein Einsatz 180 eingebracht, der die Öffnung verschließt und am Boden des Sammelbeckens 176 einen sich in Richtung auf die Stirnwand 17 verjüngenden Schlammtrichter festlegt. Pumpe und Schlammtrichter können, wie aus Fig. 16 ersichtlich, in Form zweier identischer Einheiten vorgesehen sein. Von der Pumpe 179 führt eine Leitung 181 nach oben zu der Vorklärstufe der Anlage. Mittels einer Überlaufrinne 182 und einer von dieser ausgehenden Überlaufleitung 183 wird das Maximalniveau des Abwassers in dem Sammelbecken 176 festgelegt.

Ein wie aus Fig. 15 ersichtlich unterirdisch geführter Abwasserkanal 184 ist durch die Seitenwandungsplatte 5 hindurchgeführt und mündet in das Sammelbecken 156. In dem Einstiegsschacht 175 ist des weiteren eine Einstiegsleiter 185 angebracht. Die normalerweise offene Oberseite des Behälters-ist mit einer Platte 186 verschlossen. Das Anschlußelement 23 dient als Entwässerung an dem Boden des Einstiegschachtes, wobei in diesem ein Rückschlagventil vorgesehen ist, welches verhindert, daß Grundwasser in das Innere des Einstiegsschachts strömt. Um ein Anheben des Abwassersammelbeckens 173 durch den Grundwasserdruck zu verhindern, ist am Fuße desselben ein Betonsockel 187 angebracht, der durch einfaches Umgießen des in eine Grube 188 gestellten Abwassersammelbeckens mit Beton erstellt werden kann, wobei die Ecksäulen 9 als in den Beton eingebettete Anker dienen. Wenn das Abwassersammelbecken 173, wie im linken Bereich von Fig. 15 dargestellt, ganz ins Erdreich eingebettet ist, kann unter Umständen der Betonanker 187 entfallen, da sich das seitlich an den Behälter angrenzende Erdreich 189 mit den an den Seitenwänden und dem Boden des Behälters rippenartigen vorstehenden Säulen 8, 9 und Schwellen 3 verzahnt.

Im folgenden sollen einige Beispiele für Kläranlagen unterschiedlicher Dimension angegeben werden, welche mit den vorstehend erwähnten Behältern und Einbauten baukastenmäßig zusammensetzbar sind. Diese sind zur Vereinfachung der Darstellung rein schematisch angegeben.

Das in Fig. 17 dargestellte Ausführungsbeispiel zeigt eine aus drei Behältern 190, 191 und 192 zusammengesetzte kompakte Kläranlagen, wobei bei einer Verwirklichung derselben eine entsprechende Geometrie erhalten wird, wenn als Behälter solche mit der halben Einheitslänge d.h. Behälter mit einer Länge von 6,1 m verwendet sind. Der Behälter 190 enthält eine al VK bezeichnete Vorklärstufe, von der das Abwasser mittels einer Leitung 193 über den als MR bezeichneten Maschinenraum in ein Belebungsbecken BB1 führt, das an seiner Ausgangsseite über ein Verbindungsstück 40 an den seitlich neben dem Behälter 190 stehenden Behälter 191 angeschlossen ist, der zwei von einer Wand 194 unterteilte und mit einem Durchlaß 195 versehene Belebungsbecken BB2 und BB3 enthält. Das Belebungsbecken BB3 ist über ein weiteres Verbindungsstück 40 unter Einhaltung des notwendigen Gefälles an den neben dem . Behälter 191 angebrachten Behälter 192 angeschlossen, der ein Nachklärbecken NK enthält. Der aus diesem abgesaugte Schlamm kann über eine Rückführungsleitung 195 in das erste Belebungsbecken BB1 eingespeist werden. Der Überschußschlamm wird in nicht näher dargestellter Weise abgeführt.

Fig. 19 zeigt eine Möglichkeit für ein Verteilersystem, mit Hilfe dessen vier parallel zueinander angeordnete Nachklärbecken NB1 bis NB4 in beliebiger Weise zur Nachklärung oder Schlammeindickung einsetzbar sind. Von einem Belebungsbekken 196 fließt das Schlammwassergemisch in einer Leitung 197 zu einem Gerinne oder Rohr 198, von dem zu jedem der Becken MB1 bis MB4 eine Abzweigleitung 199, 200, 201 und 202 führt. Ventile 203 bis 206 ermöglichen es aus dem Rohr 198 jede der Abzweigleitungen 199 bis 202 seperat zu beschicken. Mit in der Zeichnung nicht näher dargestellten Schlammhebern verbundene Leitungen 207 bis 210 führen aus den Becken NB1 bis NB4 den sich absetzenden Schlamm in ein Verteilerrohr 211, wobei in den Leitungen 207 bis 210 nicht dargestellte Rückschlagventile enthalten sind. Von dem Verteilerrohr 211 führen Abzweigleitungen 212 bis 215, in die Ventile 216 bis 219 eingesetzt sind, in die Behälter NB1 bis NB4. Die Leitungen 212 bis 215 kön-

- 42 -

nen vor der Einmündung in die Behälter mit den Leitungen 199 bis 202 zusammengefaßt sein. Das Verteilerrohr 211 enthält des weiteren ein Mehrwegeventil 220, das eine absperrbare Verbindung zu einer Leitung 221 herstellt, über die eine Rückführung des Schlamms zu dem Belebungsbecken 196 erfolgen kann. Des weiteren ist über das Ventil 220 eine Verbindung zu einer Leitung 222 herstellbar, mittels der der Überschußschlamm in nicht näher gezeigte Schlammbehälter aus dem System entfernbar ist.

Das vorstehend beschriebene Verteilersystem macht es möglich alle Becken NB1 bis NB4 als Nachklärbecken zu betreiben, sowie einzelne oder mehrere davon als Eindickraum zu verwenden, durch entsprechende Betätigung der Ventile 203 bis 206 sowie 216 bis 219 und 220. Es sei beispielsweise angenommen, daß die Becken NB1 und NB2 als Nachklärbecken betrieben werden. In diesem Falle sind die Ventile 203 und 204 offen, so daß das aus dem Belebungsbecken 196 über die Leitung 197 kommende Schlammgemisch in diese Behälter eintritt. Der über die Leitungen 207 und 208 intermittierend abgesaugte Schlamm gelangt sodann über die Leitungen 214 und 215 bei offenen Ventilen 218 und 219 in die Becken NB3 und NB4 in denen eine weitere Schlammeindickung stattfindet. Bei diesem Betriebszustand sind die Ventile 216, 217 sowie 205 und 206 geschlossen, wobei ein entstehender Überschußschlamm entweder abgeführt oder zum Belebungsbecken zurückgeführt werden kann.

Da sich die verschiedenen anderen Schaltmöglichkeiten ohne weiteres ergeben, braucht hierauf nicht im einzelnen eingegangen werden.

Bei den folgenden in den Fig. 20 bis 24 beschriebenen bevorzugten Ausführungsbeispielen für unterschiedlich konzipierte und ausgelegte Kläranlagen, welche mittels der vorstehend beschriebenen Behälter und Einbauten im Baukastensystem zusammengestellt sind ist zum vereinfachten Verständnis in den jeweiligen-Baueinheiten durch die im folgenden wiedergegebene Buchstabenkombination deren Funktion angegeben:

Vorklärbereich mit Siebmaschine VK, Siebgutbehälter SB Maschinenraum MR, Belebungsbecken BB, Nachklärbecken NK, Schlammeindicker SE, Schlammtrockenbeete ST sowie eine in Fig. 20 verwendete zusätzliche Chlorierung CL. Mit AZ ist der Abwasserzulauf, mit AA der Abwasserablauf bezeichnet. Die Führung des Abwassers und des Schlammes ist jeweils durch Pfeile wiedergegeben.

Die in Fig. 20 gezeigte Anlage faßt in einem Behälter die Vorklärstufe, den Maschinenraum und ein Chlorungsbecken zusammen. Aus der Vorklärung wird das Abwasser durch vier seitlich nebeneinander angeordnete Behälter hindurchgeleitet, die jeweils ein Belebungsbecken bilden, wobei benachbarte Belebungsbecken wie durch die Pfeile angedeutet jeweils gegensinnig durchlaufen werden. Am Ende des letzten Belebungsbeckens wird das Wasserschlammgemisch auf zwei parallel zueinander angebrachte Nachklärbecken verteilt, die sich parallel an die Belebungsbecken anschließen. Das geklärte Abwasser fließt dann zu dem Abwasserablauf, wobei es, falls nötig, mittels eines Ventiles 223 durch das Chlorungsbecken CL geleitet wird. Der sich in den Nachklärbecken absetzende Schlamm wird auf zwei stirnseitig einander gegenüberstehende Schlammeindicker verteilt, die senkrecht zu den Belebungs- und Nachklärbecken seitlich neben diesen angeordnet sind. Der hierin verdickte Schlamm wird auf vier Schlammtrockenbeete verteilt, in denen er austrocknen kann. Das in den Schlammeindicken anfallende Abwasser wird ebenfalls in Richtung auf den Abwasserablauf geleitet. Durch das blockweise Zusammenfassen der vier Belebungsbecken und der beiden Nachklärbecken und die stirnseitig zu dieser Behältergruppe angeordneten Schlammeindicker bzw. den die Vorklärung, den Maschinenraum und die Nachklärung enthaltenden Behälter, erhält man eine raumsparende und kompakte Kläranlage mit kurzen und übersichtlichen Rohrleitungen.

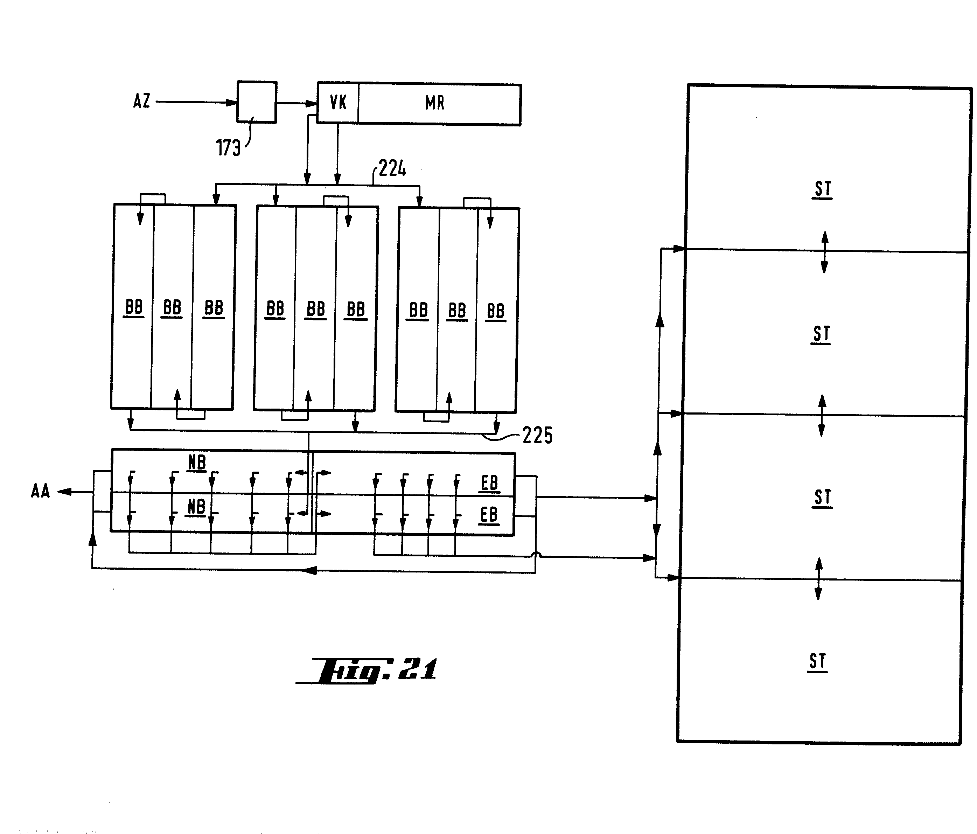

Die in Fig. 21 dargestellte Kläranlage enthält drei parallel zueinander über ein Verteilersystem 224 mit dem vorgeklärten Abwasser beschickte Gruppen von je drei parallel zueinander angeordneten und in Reihe durchflossenen Belebungsbecken, wobei diese drei Gruppen seitlich nebeneinander stehend angeordnet sind. Das hieraus abgezogene Schlammwassergemisch wird in einem Gerinne 224 homogenisiert und fließt von dort in zwei parallel zueinander betriebene Nachklärbecken, wobei der von ihnen mittels Schlammhebern abgesaugte Schlamm zwei parallel zueinander angeordneten Eindickbecken zugeführt wird, die mit ihren Stirnseiten den Nachklärbecken gegenüber stehen, so daß je ein Nachklärbecken und ein Eindickbecken ein Paar bildet. Der in den Eindickbecken weiter eingedickte Schlamm wird anschließend in vier Schlammtrockenbeete verteilt und dort eingetrocknet. Die Nachklärbecken und Eindickbecken sind stirnseitig zu den Gruppen der Belebungsbecken derart angeordnet, daß von der Gesamtanordnung der Belebungsbecken, Nachklärbecken und Eindickbecken eine etwa quadratische Fläche belegt ist. Auch hier ergeben sich einfache Rohrführungen und eine übersichtliche Gesamtanlage.

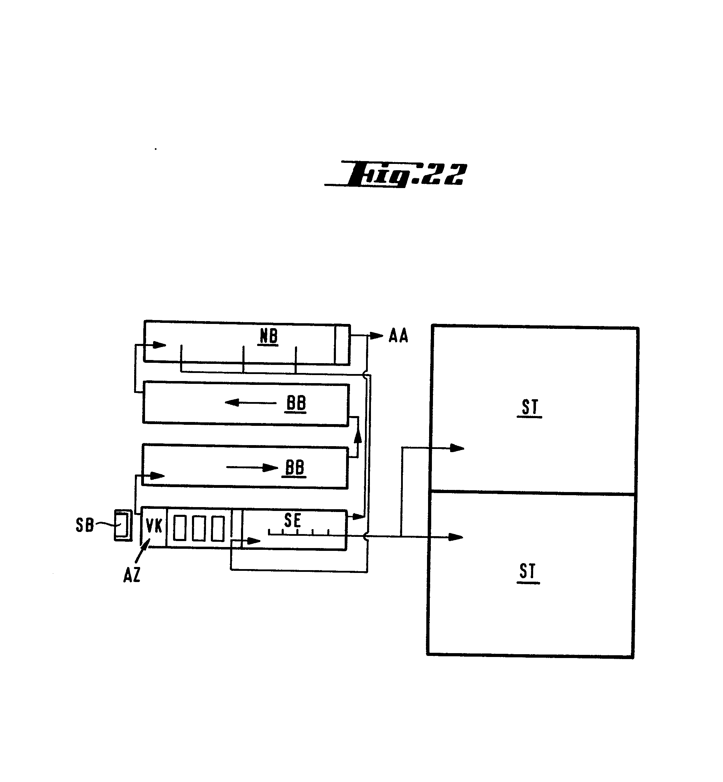

Fig. 22 zeigt eine kleinere Anlage die aus vier seitlich nebeneinander angeordneten Behältern besteht, wobei in diesem Falle der den Maschinenraum und die Vorklärstufe ent-

0086489

haltende Behälter ein als Schlammeindicker verwendetes Nachklärbecken enthält. Das von der Vorklärstufe austretende Abwasser durchfließt nacheinander zwei seitlich nebeneinander angeordnete, jeweils einen Behälter ausfüllende Belebungsbecken, um sodann in ein Nachklärbecken einzutreten, das parallel zu dem letzten Belebungsbecken angeordnet ist. Der dort entstehende Schlamm wird in das Schlammeindickbecken in dem ersten Behälter zurückgeführt und nach weiterer Verdickung in Schlammtrockenbeete ST geleitet.

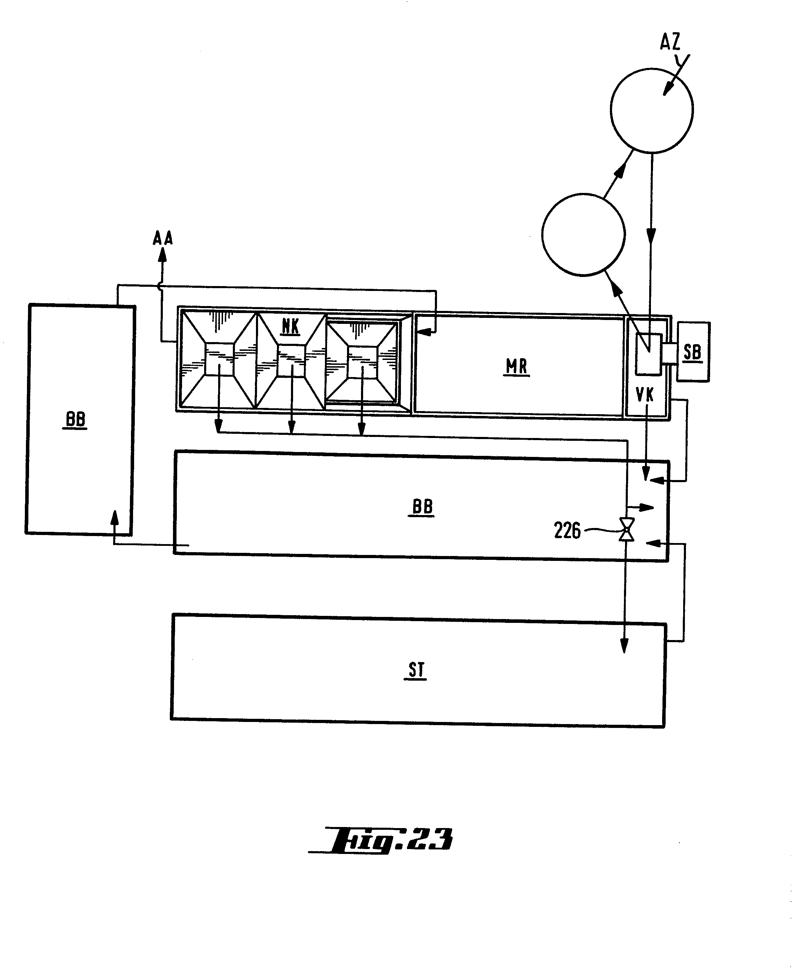

Die in Fig. 23 dargestellte Anlage ist ähnlich wie die Anlage von Fig. 22, zumindest was den Aufbau des ersten die Vorklärstufe und den Maschinenraum enthaltenden Behälter betrifft, da dieser ebenfalls ein Nachklärbecken enthält, das in diesem Fall auch als solches verwendet wird. Das aus der Vorklärstufe austretende Abwasser durchläuft einen parallel zu dem ersten Behälter angeordneten Behälter der ein Belebungsbecken bildet, sowie einen anschließend senkrecht an dessen Stirnfläche angeordenten kleineren Behälter, der ebenfalls ein Belebungsbecken bildet um anschließend in das Nachklärbecken im ersten Behälter einzutreten. Der dort gebildete Schlamm wird dem ersten Belebungsbecken zugeführt, oder über ein Ventil 26 in einen Schlammbehälter ST eingebracht, der in gleicher Weise wie die anderen Behälter ausgebildet ist, jedoch keine Einbauten enthält.

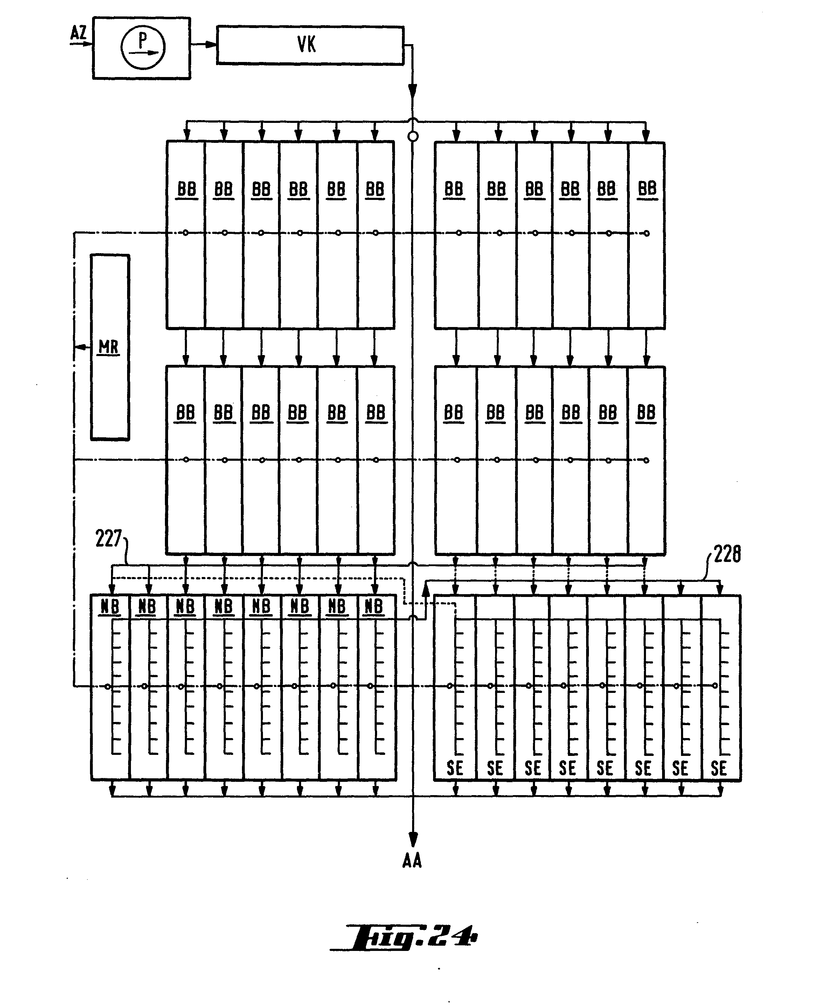

Fig. 24 zeigt schließlich eine Großanlage bei der ein Behälter allein den Maschinenraum aufnimmt von dem, wie durch die Strichpunktierung angedeutet, zentrale Verteilerrohre für die Druckluft zu drei kaskadenartig hintereinander geschaltete Behältergruppen führen. Mit Ausnahme einer in einem eigenen Behälter angebrachten Vorklärstufe

0086489

welche stirnseitig und quer vor den Behältergruppen angeordnet ist, sind sämtliche Behälter in sämtlichen Behältergruppen parallel zueinander ausgerichtet. Das Abwasser durchfließt zunächst zwölf Belebungsbecken, von denen je sechs Seite an Seite liegend zu einer Gruppe zusammengefaßt sind, wobei diese beiden Gruppen im Abstand nebeneinander angeordnet sind. An die einzelnen Belebungsbecken dieser Gruppe, die parallel zueinander durchfloßen werden, schließen sich stirnseitig weitere zwölf Belebungsbecken an, die ebenfalls zu zwei Sechsergruppen zusammengefaßt sind. Die vier je aus sechs Belebungsbecken bestehenden Gruppen können auch so aneinandergeschoben werden, daß sich die in Reihe durchfloßenen Becken mit ihren Stirnseiten unmittelbar gegenüberstehen und daß die parallel zueinander fließenden Becken jeweils Seite an Seite liegen. Das aus der zweiten Gruppe der Belebungsbecken bildenden Behälter austretende Schlammwassergemisch wird über ein Verteilersystem 227 auf eine Gruppe von acht Seite an Seite stehender Nachklärbecken verteilt, deren Schlamm, soweit er nicht in die Belebungsbecken oder nach außen abgeführt wird, anschließend durch ein Verteilersystem 228 in acht Seite an Seite angeordnete Eindickbecken gelangt. Die Verteilersysteme 227 und 228 können, wie durch die Punktierung angedeutet, derart gestaltet sein, daß die Nachklärbecken und Eindickbecken vertauscht sind. Es ist auch möglich sie derart zu gestalten, wie dies beispielshalber für vier Becken in Fig. 19 dargestellt ist.

Es versteht sich, daß bei den vorstehenden schematischen Ausführungsbeispielen nur die wichtigsten Einzelheiten gezeigt sind, und daß beispielsweise aus Übersichtsgründen in vielen Fällen die Druckluftleitungen bzw. die Schlammrückführung zu den Belebungsbecken weggelassen sind.

Aufgrund der geeigneten Dimensionierung der Becken und deren Querschnittsform sowie der verwendeten Einbauten wird eine hervorragende Klärwirkung erzielt, die es prinzipiell möglich macht, die Anlagen deutlich kleiner zu dimensionieren, als dies beispielsweise durch die deutschen Vorschriften festgelegt ist. Dies gilt besonders dann, wenn das Abwasser vor der Einleitung in die Anlage in einem Abwassersammelbecken zusammengeführt ist, so daß von dort eine nahezu konstante Einspeisung derselben in die Anlage erfolgen kann.

- 48 -

Werner Westermair
Römerstr. 2
8062 Markt Indersdorf

Kläranlage

<u>Patentansprüche</u>

1. Kläranlage mit einer Vorklärstufe zur mechanischen Reinigung des Abwassers, einer Belebungsstufe mit zumindest einem Belebungsbecken und mit zumindest einer Nachklärstufe, welche zumindest ein Nachklärbecken enthält, sowie mit einer Druckluftquelle zur Versorgung der Belebungsstufe mit Druckluft,
d a d u r c h   g e k e n n z e i c h n e t ,
dass ein Boden (2), Seiteninnenwandungen (19,2o) und Stirninnenwandungen (17,18) und/oder quer die Seiteninnenwandungen verbindende Trennwandungen (51) zumindest eines quaderformigen, eigensteifen und frei aufstellbaren Behälters (1) die Belebungsbecken (BB) und die Nachklärbecken (NB) bilden, und dass in den Stirnwänden (19,2o) und in den Trennwandungen (51) Durchgangsöffnungen (28,8o) vorgesehen sind, durch welche das die Behälter in Längsrichtung durchfliessende Abwasser in die Belebungsbecken (BB), von diesen in die Nachklärbecken (NB) und aus diesen gelangt.

2.    Kläranlage nach Anspruch 1, dadurch gekennzeichnet, dass der Behälter (1) oben offen ist, der Boden (2) die Seiteninnenwandungen (19,2o), die Stirninnenwandungen (21,22) und/oder die Trennwandungen (51) ebensind, und dass sämtliche Becken und Behälter über ihre gesamte Länge die gleiche rechteckförmige Querschnittsdimension aufweisen.

3.    Kläranlage nach Anspruch 1, dadurch gekennzeichnet, dass alle Behälter (1) die gleiche Einheitslänge oder ein Teil der Behälter die Einheitslänge und ein anderer Teil die halbe Einheitslänge aufweisen.

4.    Kläranlage nach Anspruch 3, dadurch gekennzeichnet, dass die Länge der Belebungsbecken (88) und/oder der Nachklärbecken jeweils ein Vielfaches eines Grund-Rasters ist, dessen Länge durch die Beziehung l/n wiedergegeben ist, wobei l die Innenlänge des Behälters und n eine ganze Zahl zwischen 5 und 3o ist.

5.    Kläranlage nach Anspruch 4, dadurch gekennzeichnet, dass das Grund-Raster für die Nachklärbecken etwa doppelt so gross ist wie das Grund-Raster der Belebungsbecken bzw. etwa viermal so gross wie das Grund-Raster derselben, wenn die Länge des Nachklärbeckens grösser ist als die halbe Innenlänge des Behälters.

6.    Kläranlage nach Anspruch 4 oder 5, dadurch gekennzeichnet, dass das Grund-Raster für die Belebungsbecken 1/2o und das Grund-Raster für die Nachklärbecken 1/12 beträgt, wenn die Länge der Nachklärbecken kleiner ist als 1/2, bzw. 1/6, wenn die Länge der Nachklärbecken grösser ist als 1/2.

7.    Kläranlage nach Anspruch 4 oder 5, dadurch gekennzeichnet, dass das Grund-Raster für die Belebungsbecken 1/24 und das Raster für die Nachklärbecken 1/12 beträgt, wenn die Länge der Nachklärbecken kleiner ist als 1/2, bzw. 1/6, wenn die Länge der Nachklärbecken grösser ist als 1/2.

8.    Kläranlage nach Anspruch 6 oder 7, dadurch gekennzeichnet, dass der Behälter (1) eine Innenlänge von 12 m aufweist.

9.    Kläranlage nach einem der vorstehenden Ansprüche, dadurch gekennzeichnet, dass die Belebungsbecken (BB) über ihre gesamte Grundfläche verteilte Belüftungseinheiten enthalten, die über dem Boden angeordnet sind und aus einheitlichen Einzelbelüftern (76) bestehen.

10. Kläranlage nach Anspruch 9,
dadurch gekennzeichnet, dass die Belüftereinheiten (76) bezüglich ihrer Längserstreckung und/oder ihrer Quererstreckung dem jeweiligen Grund-Rastermass entsprechen.

11. Kläranlage nach einem der vorstehenden Ansprüche,
dadurch gekennzeichnet, dass der in der Vorklärstufe (VK),
dem Nachklärbecken (NK) und gegebenenfalls nachgeschalteten Eindickbecken (SE) anfallende Schlamm mittels druckluftbetätigter Schlammheber (87) absaugbar ist.

12. Kläranlage nach Anspruch 11,
dadurch gekennzeichnet, dass die Nachklärbecken (NK)
Rutschflächen (112) längs der Seitenwände (19,2o) enthalten, welche von diesen schräg zu dem Boden verlaufen, vorzugsweise in einem Winkel von 45$^{\circ}$.

13. Kläranlage nach Anspruch 12,
dadurch gekennzeichnet, dass insbesondere bei Nachklärbecken (NB) mit einer Länge, die kleiner ist als die halbe Innenlänge 1/2 des Behälters (1), in der Mitte zwischen den Rutschflächen (112) auf dem Boden (2) des Behälters (1) ein durchlaufendes Dreiecksprofil (113) angebracht ist, das den beiden Seitenwänden (19,2o) zugekehrte weitere Rutschflächen bildet.

14. Kläranlage nach Anspruch 12 oder 13,
dadurch gekennzeichnet, dass zwischen einander zugekehrten Rutschflächen vorzugsweise im Abstand des Grund-Rasters der

Nachklärbecken weitere Dreiecksprofilelemente (114) angebracht sind, die senkrecht zu den Seitenwänden (19,2o) verlaufen.

15. Kläranlage nach einem der Ansprüche 12 bis 14, dadurch gekennzeichnet, dass zumindest ein Teil der Rutschflächen von vorgefertigten eigenschweren, vorzugsweise aus Beton bestehenden Bauteilen gebildet sind, welche lose auf dem Boden des Behälters stehen.

16. Kläranlage nach einem der Ansprüche 1o bis 15, dadurch gekennzeichnet, dass die Nachklärbecken derart über ihre gesamte Grundfläche verteilte einheitliche Schlammheber enthalten, dass je ein Schlammheber zu jedem rundum von Rutschflächen begrenzten Bodenbereich hinabreicht. (Fig.7,8)

17. Kläranlage nach einem der vorstehenden Ansprüche, dadurch gekennzeichnet, dass in ihr der gesamte Transport des die Anlage durchlaufenden Abwassers und der aus diesem entstehenden flüssigen Produkte ausschliesslich mittels Druckluft und/oder eines vorgegebenen Gefälles erfolgt.

18. Kläranlage nach einem der vorstehenden Ansprüche, dadurch gekennzeichnet, dass die Durchgangsöffnungen (28,8o), welche die Stirnwandungen und/oder die Trennwandungen durchsetzen, und/oder die Behälter (1) so angeordnet sind, dass zwischen in Durchlaufrichtung aufeinanderfolgenden Becken ein Gefälle entsteht, das 2 bis 7 cm, vorzugsweise etwa 5 cm, beträgt.

19. Kläranlage nach einem der vorstehenden Ansprüche, dadurch gekennzeichnet, dass der zumindest einen Auslassöffnung (8o) der Belebungsbecken (BB) ein Auslaufregler (78) vorgeschaltet ist, der bei einem stossweisen Anstieg der Abwasserzufuhr zum Belebungsbecken eine Pufferwirkung ausübt und verhindert, dass das Abwasser ungeklärt zum Nachklärbecken (NB) strömt.

20. Kläranlage nach Anspruch 19, dadurch gekennzeichnet, dass als Auslaufregler eine zur Auslauföffnung führende Rinne (78) dient, die seitlich mit einer Lochung (79) versehen ist, wobei die von der Lochung eingenommene Gesamtfläche und/oder die Lage der Auslassöffnung derart bemessen sind, dass bei normalen Durchsatz von Abwasser der Flüssigkeitsspiegel im Belebungsbecken (BB) unter der Kante der Rinne (78) verbleibt.

21. Kläranlage nach Anspruch 2o, dadurch gekennzeichnet, dass die Rinne (78) längs zu der Stirnwand (15,16) bzw. der Trennwandung verläuft, welche das Belebungsbecken ausgangsseitig abschliesst.

22. Kläranlage nach einem der vorstehenden Ansprüche, dadurch gekennzeichnet, dass die zu einem Nachklärbecken (NB) führende Auslauföffnung (8o) zu einem in dem Nachklärbecken (NB) angeordneten Rohr (82) führt, dessen Oberseite (84) über den Flüssigkeitspegel des Nachklärbeckens hinaufreicht und dessen unteres Ende (83) unterhalb des Flüssigkeitsspiegels in dem Nachklärbecken, jedoch oberhalb der Ansaugöffnung benachbarter Saugheber (87) mündet.

23. Kläranlage nach einem der vorstehenden Ansprüche, dadurch gekennzeichnet, dass die Belebungsstufe zumindest zwei Belebungsbecken (BB) und die Nachklärstufe zumindest zwei Nachklärbecken (NB) enthält, die in Reihe durchflossen sind, und dass Mittel (13o) vorgesehen sind, über welche die Einlass-(28) und Auslassöffnung (129) jedes Belebungsbeckens (BB) und/oder Nachklärbeckens (NB) kurzschliessbar sind. (Fig.12)

24. Kläranlage nach Anspruch 23, gekennzeichnet durch einen biegsamen, an die Einlass-(28) bzw. Auslassöffnungen (129) mit seinen freien Enden ankoppelbaren Schlauch (13o) zum Kurzschliessen der Belebungsbecken und/oder Nachklärbecken.

25. Kläranlage nach einem der Ansprüche 9 bis 24, dadurch gekennzeichnet, dass die Belüftungseinheiten (76) jedes Belebungsbeckens auf der Oberseite eines zentral mit Druckluft versorgten Rohrgerüstes (75) angebracht sind, das auf dem Boden des Belebungsbeckens vorzugsweise über Abstandshalter aufliegt.

26. Kläranlage nach einem der vorstehenden Ansprüche, dadurch gekennzeichnet, dass auf den Behältern (1), vorzugsweise parallel zu deren Längsachse, die Rohre (69) einer zentralen Druckluftversorgung (67) verlaufen, an die Abzweigleitungen (74,122) zu den einzelnen Verbrauchern (76,87) anschliessbar sind.

27. Kläranlage nach Anspruch 26,
dadurch gekennzeichnet, dass der Anschluss der zu den Belüftungseinheiten und/oder den Schlammhebern führenden Abzweigleitungen über einen biegsamen Schlauch (137) erfolgt.


28. Kläranlage nach Anspruch 27,
gekennzeichnet durch pneumatisch betätigbare Hubeinrichtungen (142,143) für die Gesamtheit der mittels je eines
Rohrgerüstes (75) zusammengefassten Belüftungseinheiten
(76) und/oder für einzelne Schlammheber (78).


29. Kläranlage nach einem der vorstehenden Ansprüche
mit einer Schlammrückführung (81) von den Nachklärbecken
(NB) und/oder Eindickbecken (SE) zu den Belebungsbecken (BB),
dadurch gekennzeichnet, dass die Schlammrückführung in
Rohren (81) oder offenen Gerinnen erfolgt, welche auf die
Oberseite der Behälter (1) aufgelegt sind.


3o. Kläranlage nach einem der vorstehenden Ansprüche,
dadurch gekennzeichnet, dass die Durchgangsöffnungen (28)
in den Stirnflächen (17,18) aller Behälter (1) identisch belegen und ausgebildet sind und Anschlusselemente (36) für
Schlauch- bzw. Rohrverbindungen (33,4o) tragen.


31. Kläranlage nach Anspruch 3o,
gekennzeichnet durch mit den Durchgangsbohrungen fluchtende, über die Stirnwandungen vorstehende Rohrstutzen (27),
die an ihren freien Enden mit Flanschen (36) versehen sind.

32.    Kläranlage nach Anspruch 3o oder 31, gekennzeichnet durch Verbindungsstücke (33) mit parallel zueinander verlaufenden Anschlussenden (35,36) und einem an diese angeschlossenen schräg verlaufenden Verbindungsrohr (34a).

33.    Kläranlage nach Anspruch 3o oder 31, gekennzeichnet durch U-förmige Verbindungsrohre (4o) mit parallel zueinander und in der gleichen Ebene belegenen Anschlussenden (41,42), wobei die Mittelabstände der Anschlussenden einen Abstand voneinander aufweisen, der bei Seite an Seite direkt aneinander angrenzend aufgestellten Behältern (1) dem Mittenabstand zweier Durchgangsöffnungen (28) in den seitlich nebeneinander liegenden Stirnflächen (17,18) benachbarter Behälter (1) entspricht.

34.    Kläranlage nach Anspruch 33, dadurch gekennzeichnet, dass die U-förmigen Verbindungsrohre (4o) mit Endflanschen (41,42) versehen sind, welche kreisbogenförmig um ihre Austrittsöffnungen verlaufende Schlitze (45) zur Aufnahme von Befestigungsschrauben enthalten.

35.    Kläranlage nach einem der vorstehenden Ansprüche, dadurch gekennzeichnet, dass eine Mehrzahl von Behältern mit    gleichen Aussenabmessungen Seite an Seite aneinander angrenzend zu einer Behältergruppe zusammengesetzt ist, von denen zumindest einer ein Belebungsbecken bildet und zumindest einer ein Nachklärbecken enthält, das mit einer Seite an eine Stirnwandung des Behälters angrenzt. (Fig.23)

36.     Kläranlage nach Anspruch 35,
dadurch gekennzeichnet, dass die Behälter (1) über die in den Stirnwandungen (17,18) gelegenen Durchgangsöffnungen (28) ausserhalb der Behälter derart miteinander verbunden sind, dass sie einen Strömungsweg festlegen, bei dem sie nacheinander und bezüglich benachbarter Behälter gegenläufig durchflossen sind. (Fig.2o)

37.     Kläranlage nach einem der vorstehenden Ansprüche, dadurch gekennzeichnet, dass hinter einer ersten Behältergruppe mit einer Mehrzahl seitlich nebeneinander angeordneter Behälter gleicher Aussenabmessung zumindest ein weiterer Behälter oder eine weitere Behältergruppe mit seitlich und/oder stirnseitig aneinander angrenzenden Behältern angebracht sind. (Fig.23, Fig.24)

38.     Kläranlage nach Anspruch 37,
dadurch gekennzeichnet, dass die Behälter der weiteren Behältergruppe mit ihren Seitenwandungen parallel zu den Behältern der ersten Behältergruppe angeordnet sind. (Fig.24)

39.     Kläranlage nach Anspruch 37,
dadurch gekennzeichnet, dass der zumindest eine weitere Behälter bzw. die Behälter der zumindest einen weiteren Behältergruppe senkrecht zu den Behältern der ersten Behältergruppe angeordnet sind. (Fig.23, Fig.21)

40. Kläranlage nach einem der Ansprüche 37 bis 39, dadurch gekennzeichnet, dass die Behälter in der ersten Behältergruppe ausschliesslich Belebungsbecken sind. (Fig.24)

41. Kläranlage nach einem der Ansprüche 37 bis 4o, dadurch gekennzeichnet, dass die Behälter in der letzten Behältergruppe ausschliesslich Nachklärbecken sind.

42. Kläranlage nach Anspruch 41, dadurch gekennzeichnet, dass die letzte Behältergruppe Paare von Behältern enthält, die sich stirnseitig im Abstand gegenüberstehen, wobei der eine Behälter jedes Paares als Nachklärbecken (NB), der andere als Schlammeindicker (SE) eingesetzt ist. (Fig.21)

43. Kläranlage nach einem der Ansprüche 35 bis 42, dadurch gekennzeichnet, dass alle Behälter, welche Belebungsbecken (BB) bilden, durch zumindest eine quer zu den Seitenwandungen verlaufende Trennwandung (126) unterteilt sind, welche zumindest eine Durchgangsöffnung (129) enthält, die mit ihrem unteren Bereich in den Flüssigkeitspegel der beiden Teilbecken eintaucht.

44. Kläranlage nach einem der Ansprüche 35 bis 43, dadurch gekennzeichnet, dass in den Behältergruppen diejenigen Behälter, welche in der Belebungsstufe und/oder der Nachklärstufe zueinander parallele Strömungswege festlegen, am Einlass- und/oder Auslass mit einer Verteilervorrichtung versehen sind, welche eine Vermischung der in die entsprechenden Becken gleicher Betriebsart einströmenden bzw. aus diesen austretenden Flüssigkeiten bewirkt. (Fig.21)

45.    Kläranlage nach einem der vorstehenden Ansprüche, dadurch gekennzeichnet, dass bei Anlagen, die aus mehreren jeweils einen Behälter ausfüllenden Belebungsbecken und/ oder Nachklärbecken bestehen, die Belebungsbecken und/oder die Nachklärbecken über Verteilersysteme an den Abwasserzulauf bzw. den Zulauf des durch die Belebungsbecken biologisch gereinigten Abwassers angeschlossen sind, welche es ermöglichen, alle Belebungsbecken und/oder Nachklärbecken oder Teilgruppen derselben wahlweise seriell oder parallel zueinander zu betreiben. (Fig.19)

46.    Kläranlage nach Anspruch 45, dadurch gekennzeichnet, dass als Verteilersystem doppelte Gerinne (198,211) vor den Belebungsbecken bzw. vor den Nachklärbecken vorgesehen sind, welche von Steuersystemen freisetzbare Abzweigungen enthalten.

47.    Kläranlage nach einem der vorstehenden Ansprüche, dadurch gekennzeichnet, dass einer der Behälter (1) als Vorklärstufe (46) zumindest ein Absetzbecken (58) mit einem druckluftbetätigten Schlammheber (6o) enthält sowie einen Maschinenraum (48) mit Vorrichtungen (67) zur Drucklufterzeugung, wobei der Behälter im Bereich des Maschinenraums mit einer Abdeckung (64) versehen ist.

48. Kläranlage nach Anspruch 47,
dadurch gekennzeichnet, dass die Vorklärstufe (46) an einem
Ende des Behälters (1) vorgesehen ist und dass auf den Behälter eine Siebvorrichtung (53) aufgesetzt ist, mittels
der aus dem zugeführten Abwasser grobe Abfallstoffe entfernbar sind.

49. Kläranlage nach Anspruch 48,
dadurch gekennzeichnet, dass über der Vorklärstufe (46) einschliesslich der Siebvorrichtung (53) und eines Aufnahmebehälters (57) für die ausgesonderten groben Abfälle ein Gehäuse (1oo) aufgesetzt ist, dessen Inneres mit dem Maschinenraum (48) derart in Verbindung steht, dass die vom Kompressor (67) für die Drucklufterzeugung angesaugte Luft aus
dem Gehäuse (1oo) gezogen wird.

5o. Kläranlage nach Anspruch 49,
dadurch gekennzeichnet, dass das Gehäuse (1oo) und der Maschinenraum (48) über einen Kanal (1o2) verbunden sind, in
den ein Ventilator (1o5) mit umkehrbarer Förderrichtung eingebaut ist, und dass eine abschaltbare direkte Luftzufuhr
(1o7) zu dem Maschinenraum (48) besteht.

51. Kläranlage nach Anspruch 5o,
dadurch gekennzeichnet, dass der Motor (66, 1o8) für den
Antrieb des Kompressors (67) und/oder der Kompressor (67)
in einen Kreislauf eines Wärmeübertragungsmediums einschaltbar sind, der zu einem im Bereich des Kanals angebrachten
Wärmetauscher (1o4) führt.

52. Kläranlage nach einem der vorstehenden Ansprüche, dadurch gekennzeichnet, dass einer der Behälter (1) auf seiner Oberseite geschlossen und als Rieselturm (148) ausgebildet ist, der im Gegenstrom von Abwasser und Druckluft beaufschlagbar ist. (Fig.14)

53. Kläranlage nach Anspruch 52, dadurch gekennzeichnet, dass der Behälter (1) im Mittelbereich parallel zu seinem Boden (2) und/oder den Seitenwandungen (4,5) verlaufende Längswände (15o) enthält, an deren einem Ende Rieselsiebe (151) angeordnet sind, wobei im Abstand von ihren entgegengesetzten Enden von dem Boden (2) schräg in Richtung auf die benachbarte Stirnfläche zur Oberseite (149) eine Trennwand (153) verläuft, welche die Rieselstrecke gegen ein jenseits der Trennwand gelegenes Maschinenhaus (154) abgrenzt, das Pumpen (155) und/oder Mittel (157) zur Drucklufterzeugung enthält.

54. Kläranlage nach Anspruch 52 oder 53, dadurch gekennzeichnet, dass die Austrittsöffnung (163) für das vorgeklärte Abwasser, zumindest eine Zuführungsöffnung für die Druckluft und zumindest eine Absaugöffnung für die Druckluft in der Oberseite (149) des Behälters angebracht sind, und/oder dass Leitungen für die Zufuhr des Abwassers und/oder die Rückführung (161) des vorgeklärten Abwassers und/oder die Rückführung (171) der durch die Rieselstrecke gedrückten Luft auf der Oberseite (149) des Behälters montiert sind.

55. Kläranlage nach einem der vorstehenden Ansprüche, dadurch gekennzeichnet, dass einer der Behälter (1) mit einer durchgehenden Längstrennwand (174) versehen ist, an deren einer Seite benachbart zu den Stirnflächen (17,18) des Behälters zumindest eine Pumpe (179) angebracht ist, deren Saugende (178) durch die Längstrennwand (174) hindurchreicht und deren Druckende an eine Leitung (181) angeschlossen ist, die längs der Längstrennwand (174) entlangführt, dass die Oberseite (186) des Behälters verschlossen ist, und dass der Behälter eine im wesentlichen parallel zu den Stirnwandungen verlaufende Sollbruchstelle enthält, längs derer er in zwei zueinander spiegelbildliche Abwassersammelbecken (173) unterteilbar ist.

56. Kläranlage nach Anspruch 55, dadurch gekennzeichnet, dass die in den Stirnseiten (17,18) des Behälters auf der den Pumpen (179) abgekehrten Seite der Längstrennwand (174) belegene Durchgangsöffnung (24) mittels eines Einsatzes (18o) verschlossen ist, der zumindest einen sich in Richtung auf die Stirnwand verjüngenden Schlammtrichter festlegt.

57. Kläranlage nach Anspruch 55 oder 56, dadurch gekennzeichnet, dass auf der den Pumpen (179) zugekehrten Seite der Längstrennwand (174) längs des Behälters, vorzugsweise an der seine Oberseite verschliessenden Wandung, eine Einstiegsleiter (185) angebracht ist.

58. Kläranlage nach einem der vorstehenden Ansprüche, dadurch gekennzeichnet, dass der Behälter (1) eine ebene rechteckförmige Bodenplatte (2) enthält, längs deren Ränder senkrecht von der Bodenplatte (2) abstehende Säulen (8,9,1o) befestigt sind, und dass an den nach innen ragenden Seiten der Säulen senkrecht zur Bodenplatte (2) verlaufende Seitenwandungsplatten (4,5) und Stirnwandungsplatten (6,7) befestigt sind.

59.     Kläranlage nach Anspruch 58, dadurch gekennzeichnet, dass die Säulen (8,9,1o) einen rechteckförmigen Querschnitt aufweisen und mit ihren Aussenseiten mit der Aussenkante der Bodenplatte (2) fluchten.

6o.     Kläranlage nach Anspruch 58 oder 59, dadurch gekennzeichnet, dass an den Ecken des Behälters (1) die Säulen (9) die dort aneinander angrenzenden Wandungsbereiche kastenförmig umfassen.

61.     Kläranlage nach einem der Ansprüche 58 bis 6o, dadurch gekennzeichnet, dass die Säulen (8,9,1o) unter dem oberen Rand (12) der Seiten- und Stirnwandungsplatten enden, und dass eine längs des oberen Randes (12) befestigte, sich auf der Oberseite der Säulen (8,9,1o) abstützende und bündig mit dem Rand der abschliessenden Verstärkung (13) um den Behälter (1) herumgeführt ist.

62.     Kläranlage nach Anspruch 61, dadurch gekennzeichnet, dass die Aussenseiten der Verstärkung (13) mit den Aussenseiten der Säulen (8,9,1o) fluchten.

63.    Kläranlage nach einem der Ansprüche 58 bis 62,
dadurch gekennzeichnet, daß unter der Bodenplatte (2)
parallel zu den Stirnwänden (17, 18) des Behälters (1)
verlaufende Schwellen (3) vorgesehen sind.

64.    Kläranlage nach einem der Ansprüche 58 bis 63,
dadurch gekennzeichnet, daß je eine Schwelle (3) längs
der stirnseitigen Kanten der Bodenplatte (2) angebracht
ist, und daß die weiteren Schwellen (3) in äquidistanten
Abständen hiervon über den Boden des Behälters verteilt
sind.

65.    Kläranlage nach Anspruch 63 oder 64, dadurch gekennzeichnet, daß die Anzahl der längs der Seitenwandungen
des Behälters vorgesehenen Säulen (8, 9) größer ist, vorzugsweise doppelt so groß wie die Zahl der Schwellen (3).

66.    Kläranlage nach einem der Ansprüche 63 bis 65,
dadurch gekennzeichnet, daß die Schwellen (3) im wesentlichen zwischen benachbarten Säulen (8) der Seitenwandung
(15, 16) angeordnet sind.

67.    Kläranlage nach einem der Ansprüche 58 bis 66,
dadurch gekennzeichnet, daß die Schwellen (3), die Säulen (8, 10) und die Verstärkungen (13) aus U-förmig abgebogenen Blechprofilen und die kastenförmigen Säulen (9)
aus dreimal um $90^\circ$ abgebogenen Blechprofilen bestehen, welche jeweils mit ihrer offenen Seite dem Behälterinneren
zugekehrt sind.

68.    Kläranlage nach einem der Ansprüche 58 bis 67,
gekennzeichnet durch die offene Oberseite des Behälters
(1) in Abständen verbindende Zuganker (14).

69. Kläranlage nach einem der Ansprüche 58 bis 68, dadurch gekennzeichnet, daß an den Stirnwandungen des Behälters (1) zwischen der kastenförmigen Säule (9) und der benachbarten Säule (8) je eine der Durchgangsöffnungen (28) angebracht ist, und daß von diesen Rohrstutzen (27) vorstehen, die an ihren freien Enden mit Flanschen (30) versehen sind, welche mit den Aussenflächen der Säulen (8, 9) fluchten.

70. Kläranlage nach einem der Ansprüche 58 bis 69, dadurch gekennzeichnet, daß die Bodenplatte (2), die Seitenwandungsplatten (4, 5), die Stirnwandungsplatten (6, 7), die Säulen (8, 9, 10), die oben umlaufende Verstärkung (13) und die Schwellen (3) aus dem gleichen Material bestehen.

71. Kläranlage nach Anspruch 70, dadurch gekennzeichnet, daß als Material Stahlblech, vorzugsweise in einer Dicke von 5mm, verwendet ist.

72. Kläranlage nach einem der vorstehenden Ansprüche, dadurch gekennzeichnet, daß die Behälter (1) innen und außen sandgestrahlt und/oder mit einer Epoxydharzschicht überzogen sind.

73. Kläranlage nach einem der vorstehenden Ansprüche, dadurch gekennzeichnet, daß die Behälter in ihren Außenabmessungen der DIN 15190 entsprechen.

Fig.1b

Fig.1c

Fig.1

Fig.1a

0086489

**Fig. 2**

**Fig. 3**

**Fig. 4**

# Fig. 5

Fig. 6

**Fig.1**

Fig. 8

**Fig. 9**

**Fig. 10**

Fig.11

0086489

Fig. 12

_Fig.13_

0086489

Fig. 14

0086489

Fig. 15

Fig. 16

## Fig.17

## Fig.18

0086489

**Fig.19**

0086489

## Fig.20

AZ — 173 — VK | MR

224

BB BB BB | BB BB BB | BB BB BB

225

NB | EB
NB | EB

AA

ST

ST

ST

ST

ST

*Fig. 21*

# Fig.22

**Fig.23**

0086489

Fig.24

Europäisches
Patentamt

# EUROPÄISCHER RECHERCHENBERICHT

EP 83 10 1417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 742 801 (W. ALDAG)<br><br>* Seite 5, letzter Absatz - Seite 6, erster Absatz; Seite 6, letzter Absatz - Seite 11 *<br><br>--- | 1,9,17 ,26,35 ,47,49 ,63,71 ,73 | C 02 F 3/02<br>B 65 D 88/12<br>E 03 F 5/10 |
| Y | FR-A-2 193 788 | 1-5,9-12,23, 24,26, 27,29, 30,35-42,45, | |
| Y | <br><br>* Seite 1, Zeile 6 - Seite 3, Zeile 23; Seite 5, Zeile 26 - Seite 6, Zeile 26; Seite 7, Zeilen 1-4, Zeilen 10-11, Zeilen 20-27; Seite 8, Zeilen 1-27; Seite 11, Zeilen 3-19 *<br><br>--- | 48,55, 71 | RECHERCHIERTE SACHGEBIETE (Int. Cl. 3)<br><br><br>E 03 F<br>B 65 D<br>C 02 F |
| Y | DE-A-1 784 315 (ENZINGER-UNION A.G.)<br><br>* Seite 6, Zeile 8 - Seite 8 *<br><br>--- -/- | 1-3,23 ,35-38 ,47,49 | |

Der vorliegende Recherchenbericht wurde für alle Patentansprüche erstellt.

| Recherchenort DEN HAAG | Abschlußdatum der Recherche 17-05-1983 | Prüfer TEPLY J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

![Europäisches Patentamt] Europäisches Patentamt

**EUROPÄISCHER RECHERCHENBERICHT**

0086489
Nummer der Anmeldung

EP 83 10 1417

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | GB-A- 973 962 | 1-3,11 ,12,16 -19,22 -24,26 ,29,35 ,37,38 | |
| Y | * Seite 2, Zeile 27 - Seite 3, Zeile 123; Figur 2, Position 10 * | 41,48 | |
| Y | US-A-3 735 870 (R.H. UDEN) * Spalte 3, Zeile 4 - Spalte 4, Zeile 62 * | 1,2 | |
| A | DE-B-1 236 415 (D. BÜHLER) * Spalte 4, Zeilen 23-46 * | 2-7 | |
| A | US-A-3 694 353 (HITTMAN ASSOCIATES) * Figur 7; Spalte 5, Zeilen 1-4 * | 13,15 | RECHERCHIERTE SACHGEBIETE (Int. Cl. 3) |
| A | US-A-3 886 065 (KAPPE ASSOCIATES) * Spalte 2, Zeile 56 - Spalte 3, Zeile 30 * | 20,21 | |
| A | GB-A- 847 203 (R. LAUTRICH) * Figur 2 * | 20,21 | |
| | --- -/- | | |

Der vorliegende Recherchenbericht wurde für alle Patentansprüche erstellt.

| Recherchenort DEN HAAG | Abschlußdatum der Recherche 17-05-1983 | Prüfer TEPLY J. |
|---|---|---|

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82

Europäisches
Patentamt

**EUROPÄISCHER RECHERCHENBERICHT**

0086489
Nummer der Anmeldung

EP 83 10 1417

Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-1 287 957 (J. GIBSON) * Figur 1, Position 24 * | 22 | |
| A | US-A-1 456 914 (J.A. COOMBS) * Seite 1, Zeilen 37-95 * | 45,46 | |
| A | US-A-3 528 549 (WASTE WATER TREATMENT CORPORATION) * Spalte 1, Zeile 59 - Spalte 2, Zeile 49 * | 52-54 | |
| A | US-A-3 646 609 (SEA-LAND SERVICE) * Figuren 5,6 * | 58-67 | |
| A | US-A-3 741 393 (AERATION SEPTIC TANK CY.) | 1 | RECHERCHIERTE SACHGEBIETE (Int. Cl. ³) |
| A | GB-A-1 498 982 (HOWDEN ENGINEERING LTD.) | 1 | |
| A | GAS UND WASSERFACH, Band 120, Nr. 6, Seiten 282-287, R. Oldenburg, München, DE. H. KOHLER et al.: "Desodorisierung von geruchsintensiver Industrieabluft mit einem Belebtschlammverfahren" * Seite 282, Zusammenfassung * | 49 | |

Der vorliegende Recherchenbericht wurde für alle Patentansprüche erstellt.

| Recherchenort DEN HAAG | Abschlußdatum der Recherche 17-05-1983 | Prüfer TEPLY J. |
|---|---|---|